# EUROPEAN PATENT APPLICATION

(11) **EP 3 952 061 A1**
(43) Date of publication of application: **09.02.2022**
(21) Application number: 20776336.8
(22) Date of filing: 25.03.2020
(51) Int. Cl.: H02K 1/14, H02K 1/18

(54) **MOTOR**

(30) Priority: 28.03.2019 JP 2019064557
(71) Applicant: DAIKIN INDUSTRIES, LTD., Osaka-shi, Osaka 530-8323 (JP)
(72) Inventor: KIDO, Naohiro, Osaka-shi, Osaka 530-8323 (JP); ASANO, Yoshinari, Osaka-shi, Osaka 530-8323 (JP); ASARI, Tsukasa, Osaka-shi, Osaka 530-8323 (JP); HIBINO, Hiroshi, Osaka-shi, Osaka 530-8323 (JP)
(74) Representative: Hoffmann Eitle
(86) International application number: PCT/JP2020/013425
(87) International publication number: WO 2020/196656

(57) **Abstract**

At least one of a stator (10) and a rotor (50, 100) of a motor (1) includes an iron core (11, 111) formed by a powder magnetic core. A first end plate (61) is arranged to contact one end surface (10B) of the iron core (11) in an axial direction. A second end plate (62) is arranged to contact another end surface of the iron core (11) in the axial direction. A rod-like portion (63) is fixed to the first end plate (61) and the second end plate (62) in a state in which the rod-like portion (63) is inserted in a through hole of the iron core (11), and the iron core (11) is sandwiched by the first end plate (61) and the second end plate (62) in the axial direction of the rotor.

## Description

### TECHNICAL FIELD

The present disclosure relates to a motor.

### BACKGROUND ART

Patent Document 1 discloses an outer rotor type motor. In the motor, a stator is fixed to a support member.

### PRIOR ART LITERATURE

### Patent Document

Patent Document 1: Japanese Laid-Open Patent Publication No. 2013-158072

### SUMMARY OF THE INVENTION

### Problems that the Invention is to Solve

If a stator is formed by a powder magnetic core, when press-fitting a support member to the stator, the press-fitting produces a force acting on the powder magnetic core in the radial direction that may damage the powder magnetic core. Also, if a rotor is formed by a powder magnetic core, when the rotor is press-fitted with respect to an axis, the force of the press-fitting produces a force acting on the powder magnetic core in the radial direction that may damage the powder magnetic core.

An objective of the present disclosure is to provide a motor that includes an iron core formed by a powder magnetic core and avoids damage to the iron core.

### Means for Solving the Problems

A motor that solves the above problems includes a stator, a rotor, and a fixing member. The rotor is rotatable relative to the stator. The fixing member includes a first end plate, a second end plate, and at least one rod-like portion. At least one of the stator and the rotor includes an iron core formed by a powder magnetic core. The iron core includes a through hole extending through the iron core in an axial direction of the rotor. The first end plate is arranged to directly or indirectly contact one end surface of the iron core in axial direction. The second end plate is arranged to directly or indirectly contact the other end surface of the iron core in the axial direction. The rod-like portion is fixed to the first end plate and the second end plate in a state in which the rod-like portion is inserted in the through hole of the iron core and the iron core is sandwiched by the first end plate and the second end plate in the axial direction of the rotor.

With this structure, the rod-like portion, which is inserted in the through hole of the iron core, is fastened to the first end plate and the second end plate so that the iron core is fixed, sandwiched between the first end plate and the second end plate. In this manner, the iron core is fixed to the fixing member by the force compressing the powder magnetic core. This avoids damage to the iron core formed by a powder magnetic core.

In the motor, it is preferred that one of the first end plate and the second end plate be formed integrally with the rod-like portion.

The fixing member includes integrally-formed parts that lessen the number of parts of the fixing member.

In the motor, it is preferred that the rod-like portion include a thread. Further, at least one of the first end plate and the second end plate includes a thread that can be joined with the thread of the rod-like portion.

The thread of the rod-like portion, which is inserted in the through hole of the iron core, is joined with the thread of at least one of the first end plate and the second end plate. This fixes the iron core with a simple structure.

In the motor, it is preferred that the fixing member further include a holding section including a thread. The rod-like portion includes a thread. At least one of the first end plate and the second end plate includes a through hole extending through the at least one of the first end plate and the second end plate in the axial direction of the rotor and allowing for insertion of the rod-like portion. The holding section is arranged to oppose the iron core with one of the first end plate and the second end plate located between the holding section and the iron core. The thread of the rod-like portion is joined with the thread of the holding section.

The thread of the rod-like portion, which is inserted in the through hole of the iron core, is inserted through the through hole of at least one of the first end plate and the second end plate and joined with the thread of the holding section. This fixes the iron core with a simple structure.

In the motor, it is preferred that at least one of the first end plate and the second end plate include a hole extending in the axial direction of the rotor and allowing for insertion of the rod-like portion. Further, the rod-like portion is fastened in the hole of at least one of the first end plate and the second end plate through any of press-fitting, shrink-fitting, or expansion-fitting.

The rod-like portion, which is inserted in the through hole of the iron core, is fastened in the hole of at least one of the first end plate and the second end plate through any of press-fitting, shrink-fitting, and expansion-fitting. Thus, the iron core is firmly fixed.

In the motor, it is preferred that the rod-like portion be adhered, fused, or welded to at least one of the first end plate and the second end plate.

With this structure, the rod-like portion inserted in the through hole of the iron core is adhered, fused, or welded to at least one of first end plate and the second end plate. Thus, the iron core is firmly fixed.

In the motor, it is preferred that the rod-like portion oppose a wall of the through hole of the iron core with a gap extending in between in a radial direction of the rotor.

With this structure, the rod-like portion inserted in the through hole of the iron core does not contact the wall of the through hole. This reduces the force acting on the iron core in the radial direction. Thus, the fixing member stably fixes the iron core.

In the motor, it is preferred that the fixing member include the rod-like portions. The rod-like portions are spaced apart from one another in a circumferential direction about a rotation axis of the rotor.

With this structure, the rod-like portions are inserted in the through hole of the iron core and fixed to the first end plate and the second end plate. In this manner, the iron core is firmly fixed.

In the motor, it is preferred that the rod-like portion include a cavity. Further, the rod-like portion includes a through portion extending in a radial direction of the rotor from an inner circumferential surface that defines the cavity to an outer circumferential surface of the rod-like portion. With this structure, the winding of the iron core can be easily drawn out through the through portion. Further, this structure reduces the weight of the motor.

In the motor, it is preferred that the stator include a stator iron core formed by a powder magnetic core.

This structure restricts generation of eddy current and loss that would be caused by an eddy current. Further, this structure increases the degree of freedom for the shape of the stator iron core.

In the motor, it is preferred that the rotor include a rotor iron core formed by a powder magnetic core.

This structure restricts generation of eddy current and loss that would be caused by an eddy current. Further, this structure increases the degree of freedom for the shape of the rotor iron core.

In the motor, it is preferred that the stator include stator iron cores arranged in the axial direction of the rotor and an interphase insulation member arranged between the stator iron cores.

With this structure, the interphase insulation member is located between the stator iron cores to obtain appropriate insulation between the stator iron cores 11. This restricts leakage of magnetic flux and improves the performance of the motor.

In the motor, it is preferred that each of the stator iron cores include a circular back yoke and a stator claw magnetic pole. The back yoke includes a through hole. The stator claw magnetic pole projects from the back yoke in a radial direction of the rotor. The interphase insulation member includes a support portion and an insulation portion. The insulation portion is located between adjacent ones of the stator iron cores. The stator claw magnetic pole contacts the support portion in at least one of a circumferential direction about a rotation axis of the rotor and the radial direction of the rotor.

With this structure, each stator iron core is positioned in at least one of the circumferential direction of the rotor and the radial direction of the rotor by contact of the stator claw magnetic pole with the support portion. In this manner, the stator iron cores can be positioned relative to one another without the need for the stator iron cores to have a complicated structure.

A referential motor will now be described.

An outer rotor type motor that includes a claw pole type stator, a rotor, and a fixing member. The rotor is rotatable relative to the claw pole type stator. The fixing member includes a first end plate, a second end plate, and at least one rod-like portion. The claw pole type stator includes a through hole extending through the claw pole type stator in an axial direction of the rotor. The first end plate is arranged to contact an end surface of the claw pole type stator at one end in the axial direction of the rotor. The second end plate is arranged to contact an end surface of the claw pole type stator at the other end in the axial direction of the rotor. The rod-like portion is fixed to the first end plate and the second end plate in a state in which the rod-like portion is inserted in the through hole of the claw pole type stator and the claw pole type stator is sandwiched between the first end plate and the second end plate in the axial direction of the rotor.

With this structure, the rod-like portion, which is inserted in the through hole of the claw pole type stator, is fastened to the first end plate and the second end plate so that the claw pole type stator is fixed, sandwiched between the first end plate and the second end plate. In this case, subtle force acts on the claw pole type stator in the radial direction of the rotor during manufacturing. Thus, the claw pole type stator can be stably fixed by the fixing member.

In the motor, it is preferred that one of the first end plate and the second end plate be formed integrally with the rod-like portion.

The fixing member includes integrally-formed parts that lessen the number of parts of the fixing member.

In the motor, it is preferred that the rod-like portion include a thread. Further, at least one of the first end plate and the second end plate includes a thread that can be joined with the thread of the rod-like portion.

The thread of the rod-like portion, which is inserted in the through hole of the claw pole type stator, is joined with the thread of at least one of the first end plate and the second end plate. This fixes the claw pole type stator with a simple structure.

In the motor, it is preferred that the fixing member further include a holding section including a thread. The rod-like portion includes a thread. At least one of the first end plate and the second end plate includes a through hole extending through the at least one of the first end plate and the second end plate in the axial direction of the rotor and allowing for insertion of the rod-like portion. The holding section is arranged to oppose the claw pole type stator with one of the first end plate and the second end plate located between the holding section and the iron core. The thread of the rod-like portion is joined with the thread of the holding section.

With this structure, the thread of the rod-like portion, which is inserted in the through hole of the claw pole type stator, is inserted through the through hole of at least one of the first end plate and the second end plate and joined with the thread of the holding section. This fixes the claw pole type stator with a simple structure.

In the motor, it is preferred that at least one of the first end plate and the second end plate include a hole extending in the axial direction of the rotor and allowing for insertion of the rod-like portion. Further, the rod-like portion is fastened in the hole of the at least one of the first end plate and the second end plate through any of press-fitting, shrink-fitting, or expansion-fitting.

The rod-like portion, which is inserted in the through hole of the claw pole type stator, is fastened in the hole of at least one of the first end plate and the second end plate through any of press-fitting, shrink-fitting, and expansion-fitting. Thus, the claw pole type stator is firmly fixed.

In the motor, it is preferred that the rod-like portion be adhered, fused, or welded to at least one of the first end plate and the second end plate.

With this structure, the rod-like portion inserted in the through hole of the claw pole type stator is adhered, fused, or welded to at least one of first end plate and the second end plate. Thus, the claw pole type stator is firmly fixed.

In the motor, it is preferred that the rod-like portion oppose a wall of the through hole of the claw pole type stator with a gap extending in between in a radial direction of the rotor.

With this structure, the rod-like portion inserted in the through hole of the claw pole type stator does not contact the wall of the through hole. This reduces the force acting on the claw pole type stator in the radial direction. Thus, the fixing member stably fixes the claw pole type stator.

In the motor, it is preferred that the fixing member include the rod-like portions. The rod-like portions are spaced apart from one another in a circumferential direction of the rotor.

With this structure, the rod-like portions are inserted in the through hole of the claw pole type stator and fixed to the first end plate and the second end plate. Thus, the claw pole type stator is firmly fixed.

In the motor, it is preferred that the rod-like portion include a cavity. Further, the rod-like portion includes a through portion extending in a radial direction of the rotor from an inner circumferential surface that defines the cavity to an outer circumferential surface of the rod-like portion. With this structure, the winding of the claw pole type stator can be easily drawn out through the through portion. Further, this structure reduces the weight of the motor.

In the motor, it is preferred that the claw pole type stator include a stator iron core formed by a powder magnetic core.

This structure restricts generation of eddy current and loss that would be caused by an eddy current. Further, this structure increases the degree of freedom for the shape of the stator iron core.

In the motor, it is preferred that the claw pole type stator include stator iron cores arranged in the axial direction of the rotor and an interphase insulation member arranged between the stator iron cores.

With this structure, the interphase insulation member is located between the stator iron cores to obtain appropriate insulation between the stator iron cores 11. This restricts leakage of magnetic flux and improves the performance of the motor.

In the motor, it is preferred that each of the stator iron cores include a circular back yoke and a stator claw magnetic pole. The back yoke includes a through hole. The stator claw magnetic pole projects from the back yoke in a radial direction of the rotor. The interphase insulation member includes a support portion and an insulation portion. The insulation portion is located between adjacent ones of the stator iron cores. The stator claw magnetic pole contacts the support portion in at least one of the circumferential direction of the rotor and the radial direction of the rotor.

With this structure, each stator iron core is positioned in at least one of the circumferential direction of the rotor and the radial direction of the rotor by contact of the stator claw magnetic pole with the support portion. In this manner, the stator iron cores can be positioned relative to one another without the need for the stator iron cores to have a complicated structure.

### BRIEF DESCRIPTION OF THE DRAWINGS

Fig. 1 is a perspective view of a motor in accordance with a first embodiment.
Fig. 2 is a perspective view of the motor shown in Fig. 1 without a rotor.
Fig. 3 is an exploded perspective view of the motor shown in Fig. 2.
Fig. 4 is an exploded perspective view of a stator iron core shown in Fig. 3.
Fig. 5 is a perspective view of an interphase insulation member shown in Fig. 3.
Fig. 6 is a perspective view showing the relationship of the inter-phase insulation member shown in Fig. 5 and a first stator.
Fig. 7 is a perspective view showing the relationship of the inter-phase insulation member shown in Fig. 5 and a second stator.
Fig. 8 is a cross-sectional view taken in an axial direction of a rotor.
Fig. 9 is a perspective view of a motor in accordance with a second embodiment.
Fig. 10 is a perspective view of an interphase insulation member shown in Fig. 9.
Fig. 11 is a perspective view showing the relationship of the interphase insulation member shown in Fig. 10 and a first stator.
Fig. 12 is a perspective view showing the relationship of the interphase insulation member shown in Fig. 10 and a second stator.
Fig. 13 is a perspective view of a motor in accordance with a third embodiment.
Fig. 14 is a perspective view of an interphase insulation member shown in Fig. 13.
Fig. 15 is a perspective view showing the relationship of the interphase insulation member shown in Fig. 14 and a first stator.
Fig. 16 is a perspective view showing the relationship of the interphase insulation member shown in Fig. 14 and a second stator.
Fig. 17 is a cross-sectional view of a motor taken in an axial direction of a rotor in accordance with a fourth embodiment.
Fig. 18 is a cross-sectional view of a motor taken in an axial direction of a rotor in accordance with a fifth embodiment.
Fig. 19 is a cross-sectional view of a motor taken in an axial direction of a rotor in accordance with a sixth embodiment.
Fig. 20 is a perspective view of a rod-like portion in accordance with a seventh embodiment.
Fig. 21 is a perspective view showing a first stator of a stator iron core in a modified example.
Fig. 22 is a perspective view showing a first stator of a stator iron core in another modified example.
Fig. 23 is a perspective view showing a first stator of a stator iron core in a further modified example.
Fig. 24 is a cross-sectional view of a rotor iron core in an inner rotor type motor.

### MODES FOR CARRYING OUT THE INVENTION

### First Embodiment

A motor 1 in accordance with a first embodiment will now be described. The scope of the disclosure is defined not by the detailed description, but by the claims and their equivalents, and all variations within the scope of the claims and their equivalents are to be construed as being included in the disclosure.

The motor 1 includes a stator 10, a rotor, and a fixing member 60. The rotor is rotatable relative to the stator 10. In the motor 1, at least one of the stator 10 and the rotor 50 includes an iron core formed by a powder magnetic core. The motor 1 has the structure of an outer rotor type motor or an inner rotor type motor.

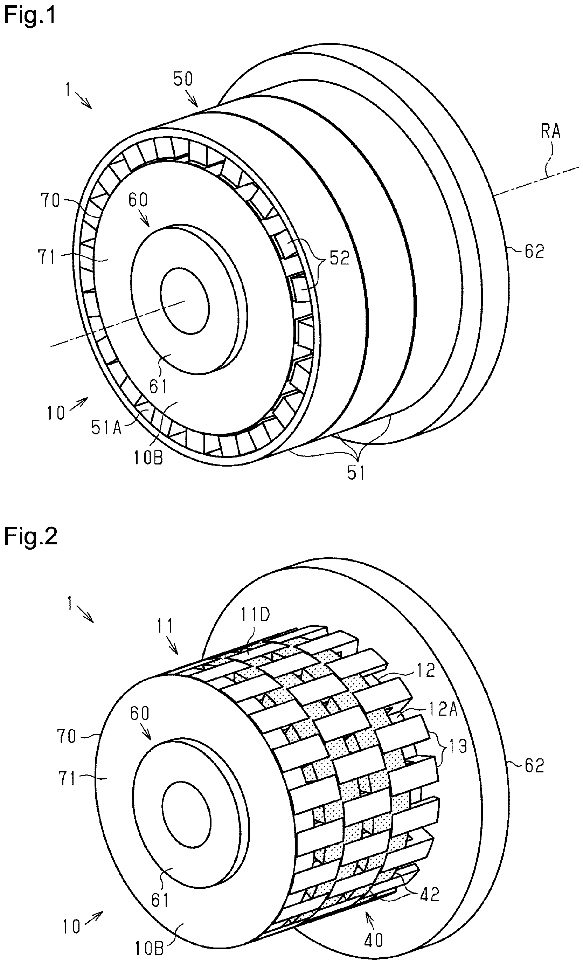

As shown in Fig. 1, the motor 1 of the present embodiment is an outer rotor type motor. The motor 1 is mounted on, for example, an air conditioner (not shown). In an example, the motor 1 is configured to drive a Sirocco fan (not shown) installed in the air conditioner. The motor 1 includes the rotor 50, which is rotatable relative to the claw-pole type stator 10 (hereafter, "the stator 10"), and the fixing member 60 that allows for fixing of the stator 10.

The rotor 50 has a rotation axis RA. The rotor 50 is rotatable about the rotation axis RA. The rotor 50 includes rotor iron cores 51 and magnets 52. The rotor iron cores 51 are arranged in an axial direction of the rotation axis RA. The magnets 52 are arranged on an inner circumferential surface 51A of each rotor iron core 51. The axial direction of the rotation axis RA coincides with the axial direction of the rotor 50 (hereafter, "the axial direction"). The rotor iron cores 51 are, for example, annular. The number of the rotor iron cores 51 corresponds to the number of stator iron cores 11 of the stator 10 (refer to Fig. 2). In an example, the number of the rotor iron cores 51 is three. The magnets 52 are arranged, for example, on the inner circumferential surface 51A of each rotor iron core 51 in a circumferential direction about the rotation axis RA and oppose an outer circumferential surface 11D of a corresponding one of the stator iron cores 11 (refer to Fig. 2). In an example, twenty magnets 52 are arranged on the inner circumferential surfaces 51A of the rotor iron cores 51 in the circumferential direction about the rotation axis RA. The circumferential direction about the rotation axis RA coincides with the circumferential direction of the rotor 50 (hereafter, "the circumferential direction"). The magnets 52 are, for example, permanent magnets.

As shown in Fig. 2, the stator 10 includes the stator iron cores 11 arranged in the axial direction and interphase insulation members 40 arranged between the stator iron cores 11. Each stator iron core 11 is formed by a powder magnetic core. The number of the stator iron cores 11 is two or greater. In an example, the number of the stator iron cores 11 is three. The stator 10 in the present embodiment has a three-dimensional magnetic structure and is a three-phase claw pole type stator, in which the stator iron cores 11 are arranged in the order of U-phase, V-phase, and W-phase. In the example shown in Fig. 2, the stator iron cores 11 of different phases are arranged together and positioned in the circumferential direction so that the phases of the stator iron cores 11 differ from one another by 120° in electrical angle.

Each interphase insulation member 40 is a non-magnetic body. In an example, the interphase insulation member 40 is formed from resin. The interphase insulation member 40 is arranged between one stator iron core 11 and another stator iron core 11 that are located next to each other in the axial direction so that the one stator iron core 11 is insulated from the other stator iron core 11. The number of the interphase insulation members 40 is determined by the number of the stator iron cores 11. In an example, the number of the interphase insulation member 40 is two. In Fig. 2, the interphase insulation members 40 are dotted.

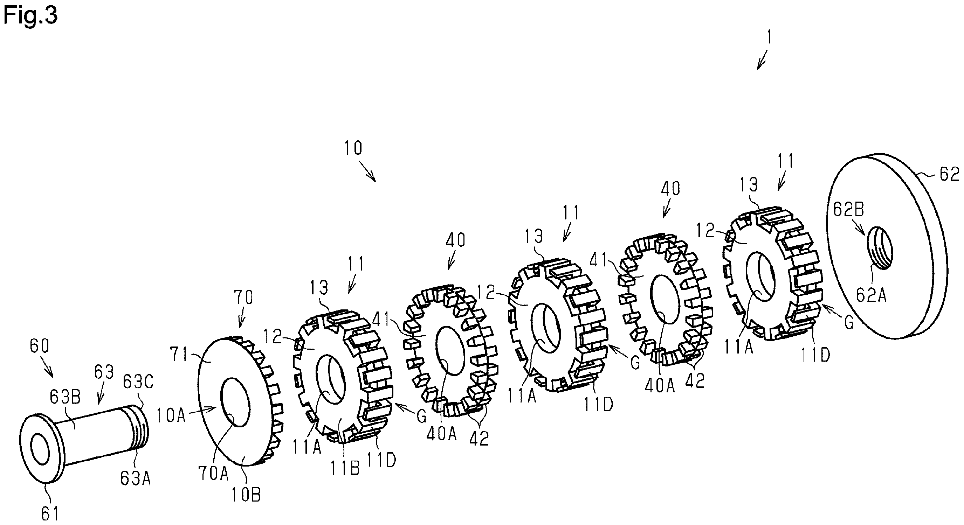

As shown in Fig. 3, the stator 10 further includes an insulator 70 located between the fixing member 60 and the stator iron cores 11. The insulator 70 is a non-magnetic body. In an example, the insulator 70 is formed from resin. The insulator 70 is arranged between the fixing member 60 and the stator iron cores 11 so that the fixing member 60 is insulated from the stator iron cores 11. In the axial direction, the insulator 70 is arranged in at least one of two positions, one between the stator iron cores 11 and a first end plate 61 of the fixing member 60 and the other between the stator iron cores 11 and a second end plate 62 of the fixing member 60. In the example shown in Fig. 3, the insulator 70 is located between the stator iron cores 11 and the first end plate 61 of the fixing member 60.

The insulator 70 has a form of, for example, one-half of an interphase insulation member 40 obtained by equally dividing the interphase insulation member 40 into two along a plane orthogonal to the axial direction. In this case, an end surface 71 of the insulator 70 that opposes the first end plate 61 of the fixing member 60 is flat. The end surface 71 of the insulator 70 forms one end surface 10B of the stator 10. The insulator 70 may have substantially the same shape as the interphase insulation member 40. Alternatively, the insulator 70 may have the form of a flat plate. The form obtained by equally dividing the interphase insulation member 40 into two along a plane orthogonal to the axial direction may be provided on the portion of the second end plate 62 opposing the stator iron core 11. The insulator 70 may be omitted from the stator 10. In this example, an end surface 11B of the U-phase stator iron core 11 that opposes the first end plate 61 of the fixing member 60 defines the end surface 10B of the stator 10.

The stator 10 includes a through hole 10A extending in the axial direction. In an example, each stator iron core 11 includes a through hole 11A extending in the axial direction, each interphase insulation member 40 includes a through hole 40A extending in the axial direction, and the insulator 70 includes a through hole 70A extending in the axial direction. The through holes 11A of the stator iron cores 11, the through holes 40A of the interphase insulation members 40, and the through hole 70A of the insulator 70 define the through hole 10A of the stator 10. The through holes 11A of the stator iron cores 11, the through holes 40A of the interphase insulation members 40, and the through hole 70A of the insulator 70 have substantially the same size.

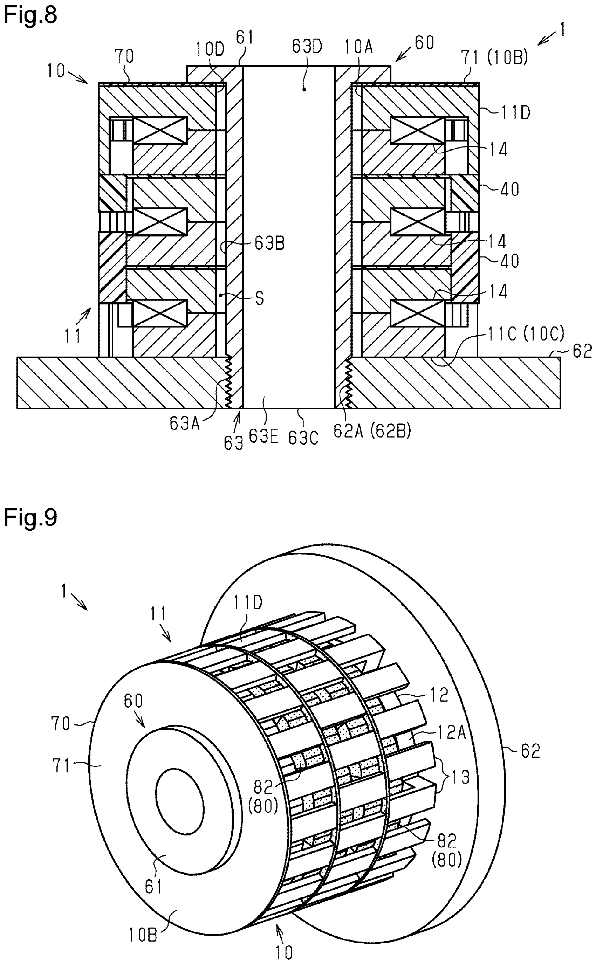

The fixing member 60 includes the first end plate 61, the second end plate 62, and at least one rod-like portion 63. The first end plate 61 has the form of, for example, a disc. The first end plate 61 is arranged to contact one end surface 10B of the stator 10 in the axial direction. In an example, the first end plate 61 is arranged to contact the end surface 71 of the insulator 70. In the example in which the insulator 70 is omitted from the stator 10, the first end plate 61 is arranged to contact the end surface 11B of the U-phase stator iron core 11. The second end plate 62 has the form of, for example, a disc. In an example, the second end plate 62 has the form of a disc having a larger diameter than the first end plate 61. The second end plate 62 is arranged to contact the other end surface 10C of the stator 10 in the axial direction (refer to Fig. 8). The end surface 10C of the stator 10 is formed by an end surface 11C of the W-phase stator iron core 11 (refer to Fig. 8). In an example, the second end plate 62 is arranged to contact the end surface 11C of the W-phase stator iron core 11.

The rod-like portion 63 is insertable into the through hole 10A of the stator 10. The rod-like portion 63 is fixed to the first end plate 61 and the second end plate 62 in a state in which the rod-like portion 63 is inserted in the through hole 10A of the stator 10 and the stator 10 is sandwiched by the first end plate 61 and the second end plate 62 in the axial direction. One of the first end plate 61 and the second end plate 62 is formed integrally with the rod-like portion 63. The rod-like portion 63 in the present embodiment is formed integrally with the first end plate 61. The rod-like portion 63 may be formed integrally with the second end plate 62.

The rod-like portion 63 includes a thread 63A. The thread 63A is formed in an outer circumferential surface 63B of the rod-like portion 63. In an example, the thread 63A is formed in a distal end 63C of the rod-like portion 63. At least one of the first end plate 61 and the second end plate 62 includes a thread 62A that can be joined with the thread 63A of the rod-like portion 63. The second end plate 62 includes an insertion hole 62B allowing for insertion of the rod-like portion 63. The insertion hole 62B extends through the second end plate 62 in, for example, the axial direction. The insertion hole 62B does not have to extend through the second end plate 62 in the axial direction. The thread 62A is formed in the wall of the insertion hole 62B of the second end plate 62. When the fixing member 60 includes more than one rod-like portion 63, the first end plate 61 and the second end plate 62 may both include the thread 62A. The rod-like portion 63 is fastened to the second end plate 62 by inserting the rod-like portion 63 through the through hole 10A of the stator 10 and into the insertion hole 62B of the second end plate 62 and then joining the thread 63A of the rod-like portion 63 with the thread 62A of the second end plate 62. In this manner, the stator 10 is fixed, sandwiched between the first end plate 61 and the second end plate 62 (refer to Fig. 8).

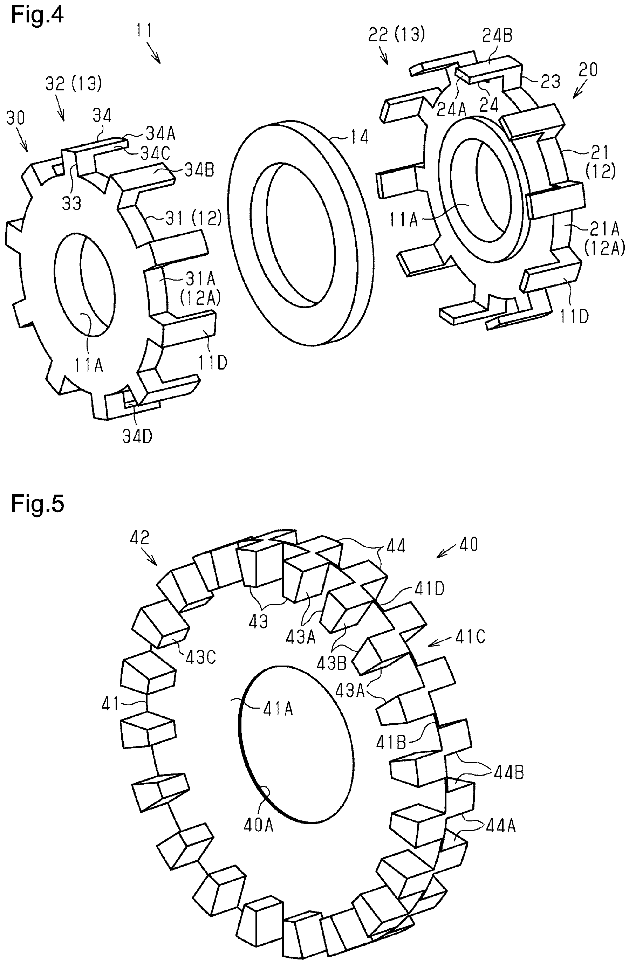

The structure of each stator iron core 11 will now be described with reference to Fig. 4.

The stator iron core 11 includes a circular back yoke 12 and stator claw magnetic poles 13 projecting from the back yoke 12 in a radial direction of the rotor 50 (hereafter, "the radial direction"). The back yoke 12 in the present embodiment is annular. The through hole 11A of the stator iron core 11 is formed in the back yoke 12. That is, the back yoke 12 includes the through hole 11A. The stator claw magnetic poles 13 project from an outer circumferential surface 12A of the back yoke 12 in the radial direction and extend in the axial direction.

The stator iron core 11 includes a first stator 20 and a second stator 30. The first stator 20 includes a circular first back yoke 21 and first stator claw magnetic poles 22 projecting from the first back yoke 21 in the radial direction. The first back yoke 21 in the present embodiment is annular. The first back yoke 21 forms the back yoke 12. The first stator claw magnetic poles 22 project from the first back yoke 21 in the radial direction and extend at least toward the second stator 30 in the axial direction. In an example, the first stator claw magnetic poles 22 project from an outer circumferential surface 21A of the first back yoke 21 and extend toward the second stator 30 in the axial direction. The first stator claw magnetic poles 22 form the stator claw magnetic poles 13. In an example, the number of the first stator claw magnetic poles 22 is ten. The first stator claw magnetic poles 22 are arranged, for example, on the outer circumferential surface 21A of the first back yoke 21 in equal intervals in the circumferential direction.

Each of the first stator claw magnetic poles 22 includes a first claw magnetic pole 23 and a second claw magnetic pole 24. The first claw magnetic pole 23 is formed by a portion including the base of the first stator claw magnetic pole 22. The first claw magnetic pole 23 extends from the outer circumferential surface 21A of the first back yoke 21 in the radial direction. The second claw magnetic pole 24 is formed by a portion including a distal end 24A of the first stator claw magnetic pole 22. The second claw magnetic pole 24 extends from the first claw magnetic pole 23 toward the second stator 30. The second claw magnetic pole 24 is, for example, box-shaped. In an example, an outer surface 24B of the second claw magnetic pole 24, which forms the outer circumferential surface 11D of the stator iron core 11, opposes the magnets 52 of the rotor 50.

The second stator 30 has, for example, substantially the same structure as the first stator 20. The second stator 30 includes a circular second back yoke 31 and second stator claw magnetic poles 32 projecting from the second back yoke 31 in the radial direction. The second back yoke 31 in the present embodiment is annular. The second back yoke 31 forms the back yoke 12. The second stator claw magnetic poles 32 project from the second back yoke 31 in the radial direction and extend at least toward the first stator 20 in the axial direction to form gaps G between the second stator claw magnetic poles 32 and the first stator claw magnetic poles 22 in the circumferential direction (refer to Fig. 3). In an example, the second stator claw magnetic poles 32 project from an outer circumferential surface 31A of the second back yoke 31 in the radial direction and extend toward the first stator 20 in the axial direction. The second stator claw magnetic poles 32 form the stator claw magnetic poles 13. In an example, the number of the second stator claw magnetic poles 32 is ten. The second stator claw magnetic poles 32 are arranged, for example, on the outer circumferential surface 31A of the second back yoke 31 in equal intervals in the circumferential direction.

Each of the second stator claw magnetic poles 32 includes a first claw magnetic pole 33 and a second claw magnetic pole 34. The first claw magnetic pole 33 is formed by a portion including the base of the second stator claw magnetic pole 32. The first claw magnetic pole 33 extends from the outer circumferential surface 31A of the second back yoke 31 in the radial direction. The second claw magnetic pole 34 is formed by a portion including a distal end 34A the second stator claw magnetic pole 32. The second claw magnetic poles 34 extend from the first claw magnetic poles 33 toward the first stator 20 to form the gaps G between the second claw magnetic poles 34 and the second claw magnetic poles 24 of the first stator claw magnetic pole 22 in the circumferential direction. The second claw magnetic pole 34 is, for example, box-shaped. In an example, an outer surface 34B of the second claw magnetic pole 34, which forms the outer circumferential surface 11D of the stator iron core 11, opposes the magnets 52 of the rotor 50.

The stator 10 further includes an annular winding 14. The winding 14 is connected to, for example, an inverter circuit-current conversion circuit (not shown) or the like. The winding 14 is arranged between the first stator 20 and the second stator 30 in the axial direction. In an example, the stator iron core 11 is formed by arranging the winding 14 between the first stator 20 and the second stator 30 and coupling the first stator 20 with the second stator 30 such that the gaps G are formed between the first stator claw magnetic poles 22 and the second stator claw magnetic poles 32 in the circumferential direction. In the present embodiment, the interphase insulation member 40 determines the positional relationship of the first stator 20 and the second stator 30, and the fixing member 60 couples the first stator 20 and the second stator 30.

The structure of each interphase insulation member 40 will now be described with reference to Figs. 5 to 7.

As shown in Fig. 5, the interphase insulation member 40 includes an insulation portion 41 and support portions 42. The insulation portion 41 is arranged between adjacent stator iron cores 11. The insulation portion 41 is, for example, annular. The insulation portion 41 is sheet-like, hollow, or meshed. The insulation portion 41 in the present embodiment is sheet-like. The support portions 42 are arranged on the insulation portion 41 to contact the stator claw magnetic poles 13 of the stator iron cores 11. In an example, the support portions 42 are arranged on the insulation portion 41 to extend in at least one of the axial direction and the radial direction. The stator claw magnetic poles 13 contact the support portions 42 in at least one of the circumferential direction and the radial direction. In the present embodiment, the stator claw magnetic poles 13 contact the support portions 42 in the circumferential direction (refer to Fig. 2). Specifically, the support portions 42 contact the first stator claw magnetic poles 22 and the second stator claw magnetic poles 32 of the stator iron cores 11, which are adjacent to the insulation portion 41, in the circumferential direction.

The support portions 42 include first support portions 43 and second support portions 44. The first support portions 43 extend from a first surface 41A of the insulation portion 41 in the axial direction. The second support portions 44 extend from a second surface 41C of the insulation portion 41 in the axial direction at the opposite side of the first surface 41A. The first support portions 43 are arranged at positions that differ from where the second support portions 44 are arranged in the circumferential direction. The difference in circumferential position between the first support portions 43 and the second support portions 44 is set based on the position of the stator iron core 11 for each phase in the circumferential direction. The stator iron core 11 contacting the first support portions 43 is located next to the stator iron core 11 contacting the second support portions 44 in the axial direction.

The first support portions 43 are arranged on an edge 41B of the first surface 41A of the insulation portion 41. In an example, the number of the first support portions 43 is twenty. The first support portions 43 are arranged, for example, on the edge 41B of the first surface 41A of the insulation portion 41 in equal intervals in the circumferential direction. Each first support portion 43 is post-shaped. In an example, the first support portion 43 has the form of a substantially quadrilateral post that becomes smaller toward the rotation axis RA of the rotor 50 in the radial direction.

### One side surface 43A (hereafter, "the first side surface 43A") of each first support portion 43 contacts one of the corresponding stator claw magnetic pole 22 of the first stator 20 and the corresponding stator claw magnetic pole 23 of the second stator 30 in the circumferential direction. Another side surface 43B (hereafter, "the second side surface 43B") of each first support portion 43 contacts the other one of the corresponding stator claw magnetic pole 22 of the first stator 20 and the corresponding stator claw magnetic pole 23 of the second stator 30 in the circumferential direction. The positional relationship of the side surfaces 43A and 43B of each first support portion 43 is reversed in the one of the first support portions 43 adjacent in the circumferential direction. In other words, in adjacent ones of the first support portions 43 in the circumferential direction, the first side surfaces 43A oppose each other or the second side surfaces 43B oppose each other.

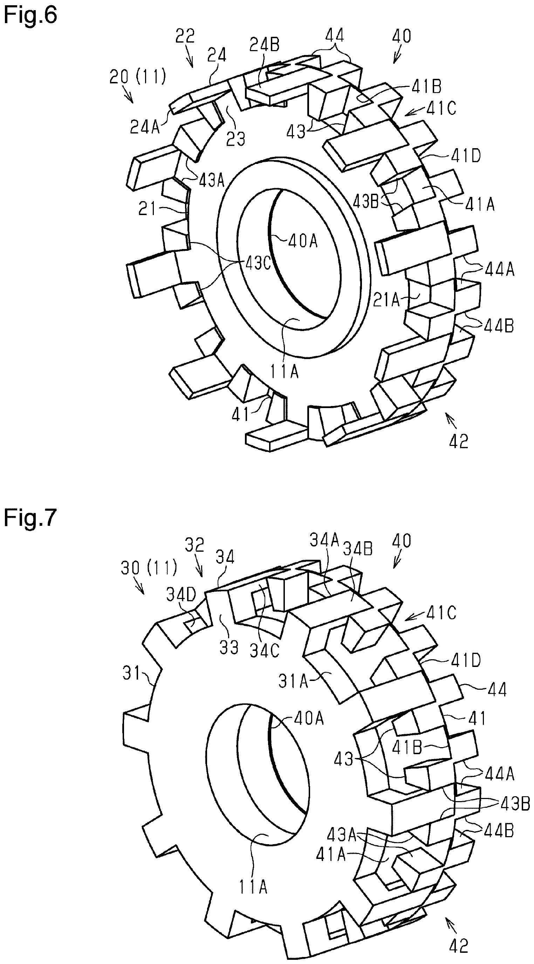

As shown in Fig. 6, the first side surfaces 43A of the first support portions 43 contact the first stator claw magnetic poles 22 of the first stator 20 in the circumferential direction. In an example, each first stator claw magnetic pole 22 is sandwiched between the first side surfaces 43A of opposing first support portions 43 in the circumferential direction. In this manner, the first stator 20 is positioned in the circumferential direction by contact of the first stator claw magnetic poles 22 with the first side surfaces 43A of the first support portions 43.

Each first support portion 43 includes a side surface 43C (hereafter, "the third side surface 43C") that is located toward the rotation axis RA in the radial direction and contacts the first back yoke 21 of the first stator 20. In an example, the third side surfaces 43C of the first support portions 43 contact the outer circumferential surface 21A of the first back yoke 21 in the radial direction. In this manner, the first stator 20 is positioned in the radial direction by contact of the first back yoke 21 with the third side surfaces 43C of the first support portions 43 in the radial direction.

As shown in Fig. 7, the second side surfaces 43B of the first support portions 43 contact the second stator claw magnetic poles 32 of the second stator 30 in the circumferential direction. Specifically, the second side surfaces 43B of the first support portions 43 contact the distal ends 34A of the second stator claw magnetic poles 32 in the circumferential direction. In the example shown in Fig. 7, the second side surface 43B of each first support portion 43 contacts a side surface 34C of the corresponding second claw magnetic pole 34 that includes the distal end 34A of the second stator claw magnetic pole 32. In an example, each distal end 34A of the second stator claw magnetic pole 32 is sandwiched between the second side surfaces 43B of opposing first support portions 43 in the circumferential direction. In this manner, the second stator 30 is positioned in the circumferential direction by contact of the second stator claw magnetic poles 32 with the second side surfaces 43B of the first support portions 43.

The second support portions 44 are arranged on an edge 41D of the second surface 41C of the insulation portion 41. In an example, the number of the second support portions 44 is twenty. The second support portions 44 are arranged, for example, on the edge 41D of the second surface 41C of the insulation portion 41 in equal intervals in the circumferential direction. The second support portions 44 have substantially the same structure as the first support portions 43.

One side surface 44A (hereafter, "the first side surface 44A") of each second support portion 44 contacts one of the corresponding stator claw magnetic pole 22 of the first stator 20 and the corresponding stator claw magnetic pole 23 of the second stator 30 in the circumferential direction. The other side surface 44B (hereafter, "the second side surface 44B") of each second support portion 44 contacts the other one of the corresponding stator claw magnetic pole 22 of the first stator 20 and the corresponding stator claw magnetic pole 23 of the second stator 30 in the circumferential direction. The positional relationship of the side surfaces 44A and 44B of each second support portion 44 is reversed in the one of the second support portions 44 adjacent in the circumferential direction. In other words, in adjacent ones of the second support portions 44 in the circumferential direction, the first side surfaces 44A oppose each other or the second side surfaces 44B oppose each other.

The first side surfaces 44A of the second support portions 44 contact the second stator claw magnetic poles 32 of the second stator 30 in the circumferential direction. The relationship of the first side surfaces 44A of the second support portions 44 and the second stator claw magnetic poles 32 is substantially the same as the relationship of the first side surfaces 43A of the first support portions 43 and the first stator claw magnetic poles 22. Thus, the second stator 30 is positioned in the circumferential direction by contact of the second stator claw magnetic poles 32 with the first side surfaces 44A of the second support portions 44.

Each second support portion 44 includes a side surface (hereafter, "the third side surface") that is located toward the rotation axis RA in the radial direction and contacts the second back yoke 31 of the second stator 30. The relationship of the third side surfaces of the second support portions 44 and the second back yoke 31 is substantially the same as the relationship of the third side surfaces 43C of the first support portions 43 and the first back yoke 21. Thus, the second stator 30 is positioned in the radial direction by contact of the second back yoke 31 with the third side surfaces of the second support portions 44.

The second side surfaces 44B of the second support portions 44 contact the first stator claw magnetic poles 22 of the first stator 20 in the circumferential direction. The relationship of the second side surfaces 44B of the second support portions 44 and the first stator claw magnetic poles 22 is substantially the same as the relationship of the second side surfaces 43B of the first support portions 43 and the second stator claw magnetic poles 32. Thus, the first stator 20 is positioned in the circumferential direction by contact of the first stator claw magnetic poles 22 with the second side surfaces 44B of the second support portions 44. In this manner, in the two stator iron cores 11 located next to each other in the axial direction, one stator iron core 11 is positioned by the first support portions 43 and the other stator iron core 11 is positioned by the second support portions 44.

The insulation portion 41 of the interphase insulation member 40 axially contacts one of the distal ends 24A of the first stator claw magnetic poles 22 and the distal ends 34A of the second stator claw magnetic poles 32 of the stator iron cores 11, which are adjacent to the insulation portion 41, that extend toward the insulation portion 41. In an example, the first surface 41A of the insulation portion 41 contacts the distal ends 34A of the second stator claw magnetic poles 32 in the axial direction, and the second surface 41C of the insulation portion 41 contacts the distal ends 24A of the first stator claw magnetic poles 22 on in the axial direction. The insulation portion 41 does not have to axially contact one of the distal ends 24A of the first stator claw magnetic poles 22 and the distal ends 34A of the second stator claw magnetic poles 32 of the stator iron cores 11, which are adjacent to the insulation portion 41, that extend toward the insulation portion 41.

As shown in Fig. 8, the rod-like portion 63 has a predetermined length in the axial direction. The axial length of the rod-like portion 63 is greater than the thickness of the stator 10 in the axial direction. Preferably, the axial length of the rod-like portion 63 is less than or equal to the sum of the thickness of the stator 10 and the thickness of the second end plate 62 in the axial direction. The axial length of the rod-like portion 63 in the present embodiment coincides with the sum of the thickness of the stator 10 and the thickness of the second end plate 62 in the axial direction. The axial length of the rod-like portion 63 may be greater than the sum of the thickness of the stator 10 and the thickness of the second end plate 62 in the axial direction.

The outer diameter of the rod-like portion 63 is smaller than the diameter of the through hole 10A of the stator 10. In an example, the rod-like portion 63 opposes a wall 10D of the through hole 10A of the stator 10 with a gap S extending in between in the radial direction. The gap S is greater than or equal to space that would be provided for a fitting tolerance of the rod-like portion 63 in the through hole 10A of the stator 10. In an example, the gap S is large enough to draw out the winding 14.

The stator 10 is formed by combining the stator iron cores 11 of each phase, the interphase insulation members 40, and the insulator 70 so that the stator iron cores 11 of each phase are positioned by the interphase insulation members 40 and the insulator 70. Then, the rod-like portion 63 is inserted in the through hole 10A of the stator 10, and the thread 63A of the rod-like portion 63 is joined with the thread 62A of the second end plate 62 to form the motor 1. In the motor 1, the stator 10 is be fixed by the fixing member 60 in a state in which the stator iron cores 11 are positioned relative to one another.

The present embodiment has the following advantages.
(1-1) In the stator 10, the stator claw magnetic poles 13 contact the support portions 42 in the circumferential direction. With this structure, the stator iron cores 11 are positioned in the circumferential direction by contact of the stator claw magnetic poles 13 with the support portions 42. This positions the stator iron cores 11 relative to one another without the need for the stator iron cores 11 to have a complicated structure.
(1-2) The first support portions 43 are arranged at positions that differ from where the second support portions 44 are arranged in the circumferential direction. With this structure, one of the stator iron cores 11 adjacent to the interphase insulation member 40 is positioned by contact of the stator claw magnetic poles 13 with the first support portions 43, and the other one of the stator iron cores 11 adjacent to the interphase insulation member 40 is positioned by contact of the stator claw magnetic poles 13 with the second support portions 44. Thus, the stator iron cores 11 can be positioned in a state in which the stator iron cores 11 are located at different positions in the circumferential direction.
(1-3) Each stator iron core 11 is formed so that the first stator claw magnetic poles 22 and the second stator claw magnetic poles 32 are alternately arranged in the circumferential direction. This structure enlarges the area of the stator iron cores 11 opposing the rotor 50 and generates stable torque.
(1-4) The support portions 42 contact the first stator claw magnetic poles 22 and the second stator claw magnetic poles 32 of the stator iron cores 11, which are adjacent to the insulation portion 41, in the circumferential direction. With this structure, in the stator iron cores 11 adjacent to the insulation portion 41, the first stators 20 are positioned in the circumferential direction by contact of the first stator claw magnetic poles 22 with the support portions 42, and the second stators 30 are positioned in the circumferential direction by contact of the second stator claw magnetic poles 32 with the support portions 42. This positions the stator iron cores 11 in the circumferential direction. Further, the first stators 20 and the second stators 30 can be positioned in the circumferential direction without the need for the stator iron cores 11 to have a complicated structure.
(1-5) In the insulation portion 41, the first surface 41A contacts the distal ends 34A of the second stator claw magnetic poles 32 in the axial direction, and the second surface 41C contacts the distal ends 24A of the first stator claw magnetic poles 22 in the axial direction. With this structure, the first surface 41A of the insulation portion 41 supports the distal ends 34A of the second stator claw magnetic poles 32, and the second surface 41C of the insulation portion 41 supports the distal ends 24A of the first stator claw magnetic poles 22. This reinforces the stator claw magnetic poles 22 and 32 and strengthens the stator iron cores 11.
(1-6) The rod-like portion 63 is fixed to the first end plate 61 and the second end plate 62 in a state in which the rod-like portion 63 is inserted in the through hole 10A of the stator 10 and the stator 10 is sandwiched between the first end plate 61 and the second end plate 62 in the axial direction. With this structure, the rod-like portion 63, which is inserted in the through hole 10A of the stator 10, is fixed to the first end plate 61 and the second end plate 62. Thus, the stator 10 is fixed, sandwiched between the first end plate 61 and the second end plate 62. In this case, subtle force acts on the stator 10 in the radial direction during manufacturing. Thus, the stator 10 can be stably fixed by the fixing member 60.
(1-7) Preferably, the stator 10 includes the stator iron cores 11 each formed by a powder magnetic core. The rod-like portion 63 is fixed to the first end plate 61 and the second end plate 62 in a state in which the rod-like portion 63 is inserted in the through hole 10A of the stator 10 and the stator 10 is sandwiched between the first end plate 61 and the second end plate 62 in the axial direction. With this structure, the rod-like portion 63, which is inserted in the through holes 10A of the stator iron cores 11, is fixed to the first end plate 61 and the second end plate 62 so that the stator iron cores 11 are fixed, sandwiched between the first end plate 61 and the second end plate 62. Thus, the stator iron cores 11 are fixed to the fixing member 60 by the force compressing the powder magnetic cores. This avoids damage to the stator iron cores 11, which are formed by powder magnetic cores.
(1-8) The rod-like portion 63 is formed integrally with the first end plate 61. Thus, the fixing member 60 includes integrally-formed parts that lessen the number of parts of the fixing member 60.
(1-9) The rod-like portion 63 is inserted in the through hole 10A of the stator 10 to join the thread 63A of the rod-like portion 63 with the thread 62A of the second end plate 62. This fixes the stator 10 with a simple structure.
(1-10) The rod-like portion 63 opposes the wall 10D of the through hole 10A of the stator iron core 11 of the stator 10 with the gap S extending in between in the radial direction. With this structure, the rod-like portion 63 inserted in the through hole 10A of the stator 10 does not contact the wall 10D of the through hole 10A. This reduces the force acting on the stator 10 in the radial direction. Thus, the fixing member 60 stably fixes the stator 10.
(1-11) The stator iron cores 11 are formed by powder magnetic cores. This structure restricts the generation of eddy current and limits loss that would be caused by an eddy current. Further, the degree of freedom for the shape of the stator iron cores 11 is increased.
(1-12) The stator 10 includes the stator iron cores 11 arranged in the axial direction of the rotor 50 and the interphase insulation members 40 arranged between the stator iron cores 11. With this structure, each interphase insulation member 40 arranged between the stator iron cores 11 provides appropriate insulation between the stator iron cores 11. This restricts leakage of magnetic flux and improves the performance of the motor 1.

### Second Embodiment

The motor 1 of a second embodiment will now be described with reference to Figs. 9 to 12. The motor 1 of the present embodiment differs from the motor 1 of the first embodiment in the structure of the interphase insulation member. In the description hereafter, same reference numerals are given to those components having the same functions as the corresponding components of the motor 1 in the first embodiment. Such components will not be described in detail. Fig. 9 shows the motor 1 without the rotor 50.

As shown in Fig. 9, the stator 10 includes the stator iron cores 11 arranged in the axial direction and an interphase insulation member 80 arranged between the stator iron cores 11. The interphase insulation member 80 is a non-magnetic body. In an example, the interphase insulation member 80 is formed from resin. The interphase insulation member 80 is arranged between one stator iron core 11 and another stator iron core 11 that are located next to each other in the axial direction so that the one stator iron core 11 is insulated from the other stator iron core 11. The number of the interphase insulation members 80 is determined by the number of the stator iron cores 11. In an example, the number of the interphase insulation members 80 is two. In Fig. 9, the interphase insulation members 80 are dotted. The insulator 70 in the present embodiment may have the form obtained by equally dividing the interphase insulation member 80 into two along a plane orthogonal to the axial direction. Alternatively, the insulator 70 may have the form of a flat plate or substantially the same shape as the interphase insulation member 80.

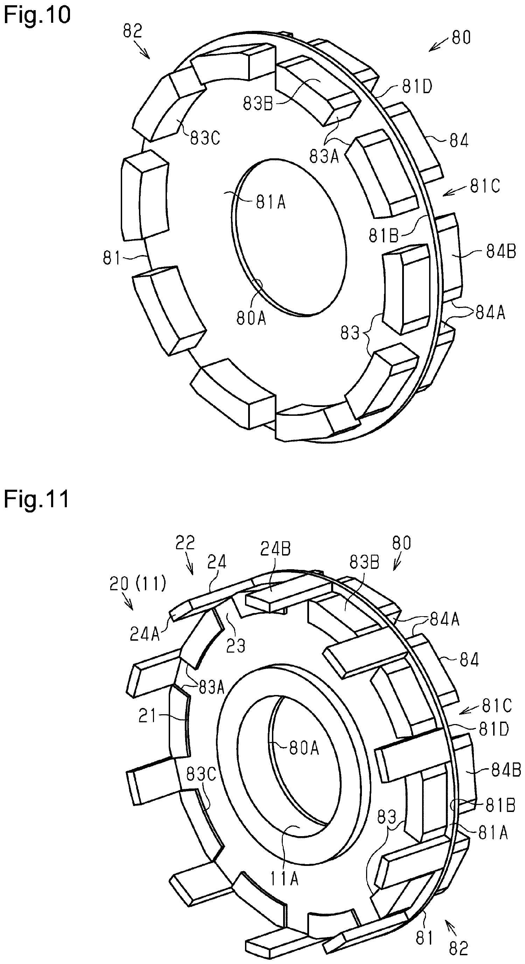

As shown in Fig. 10, each interphase insulation member 80 includes a through hole 80A extending in the axial direction. The through hole 80A defines the through hole 10A of the stator 10. The interphase insulation member 80 includes an insulation portion 81 and support portions 82. The insulation portion 81 is arranged between adjacent stator iron cores 11. The insulation portion 81 has substantially the same shape as the insulation portion 41 of the first embodiment. The support portions 82 are arranged on the insulation portion 81 to contact the stator claw magnetic poles 13 of the stator iron cores 11. In an example, the support portions 82 are arranged on the insulation portion 81 to extend in at least one of the axial direction and the radial direction. The stator claw magnetic poles 13 contact the support portions 82 in at least one of the circumferential direction and the radial direction. In the present embodiment, the stator claw magnetic poles 13 contact the support portions 82 in the circumferential direction and the radial direction (refer to Fig. 9). Specifically, the support portions 82 contact one of the first stator claw magnetic poles 22 and the second stator claw magnetic poles 32 of the stator iron cores 11, which are adjacent to the insulation portion 81, in the circumferential direction and contact the other one of the first stator claw magnetic poles 22 and the second stator claw magnetic poles 32 in the radial direction.

The support portions 82 include first support portions 83 and second support portions 84. The first support portions 83 extend from a first surface 81A of the insulation portion 81 in the axial direction. The second support portions 84 extend from a second surface 81C of the insulation portion 81 in the axial direction at the opposite side of the first surface 81A. The first support portions 83 are arranged at positions differing from where the second support portions 84 are arranged in the circumferential direction. The difference in position between the first support portions 83 and the second support portions 84 in the circumferential direction is set based on the positions of the stator iron cores 11 of each phase in the circumferential direction. The stator iron core 11 contacting the first support portions 83 is located next to the stator iron core 11 contacting the second support portions 84 in the axial direction.

The first support portions 83 are arranged near an edge 81B of the first surface 81A of the insulation portion 81. In an example, the first support portions 83 are arranged on the first surface 81A so that a predetermined gap extends between the first support portions 83 and the edge 81B of the first surface 81A in the radial direction. The predetermined gap is large enough to accommodate the distal ends 24A and 34A of the stator claw magnetic poles 22 and 32. In an example, the number of the first support portions 83 is ten. The first support portions 83 are arranged, for example, near the edge 81B of the first surface 81A of the insulation portion 81 in equal intervals in the circumferential direction. The first support portions 83 extend in the circumferential direction. Each first support portion 83 is post-shaped. In an example, the first support portion 83 has the form of a substantially quadrilateral post that becomes smaller toward the rotation axis RA of the rotor 50 in the radial direction.

Each first support portion 83 includes a side surface 83A (hereafter, "the first side surface 83A") that contacts one of a corresponding one of the stator claw magnetic poles 22 of the first stator 20 and a corresponding one of the stator claw magnetic poles 23 of the second stator 30 in the circumferential direction. Each first support portion 83 includes a side surface 83B (hereafter, "the second side surface 83B") at a side opposite to a side surface 83C that is located toward the rotation axis RA in the radial direction. The second side surface 83B contacts the other one of a corresponding one of the stator claw magnetic poles 22 of the first stator 20 and a corresponding one of the stator claw magnetic poles 23 of the second stator 30

As shown in Fig. 11, the first side surfaces 83A of the first support portions 83 contact the first stator claw magnetic poles 22 of the first stator 20 in the circumferential direction. Specifically, the first side surfaces 83A of the first support portions 83 contact the first claw magnetic poles 23 of the first stator claw magnetic poles 22 in the circumferential direction. In an example, the first claw magnetic poles 23 of the first stator claw magnetic poles 22 are each sandwiched by the opposing first side surfaces 83A of the first support portions 83 in the circumferential direction. Thus, the first stator 20 is positioned in the circumferential direction by contact of the first stator claw magnetic poles 22 with the first side surfaces 83A of the first support portions 83.

In each first support portion 83, the side surface 83C (hereafter, "the third side surface 83C") that is located toward the rotation axis RA in the radial direction contacts the first back yoke 21 of the first stator 20. In an example, the third side surfaces 83C of the first support portions 83 contact the outer circumferential surface 21A of the first back yoke 21 in the radial direction. In this manner, the first stator 20 is positioned in the radial direction by contact of the first back yoke 21 with the third side surfaces 83C of the first support portions 83.

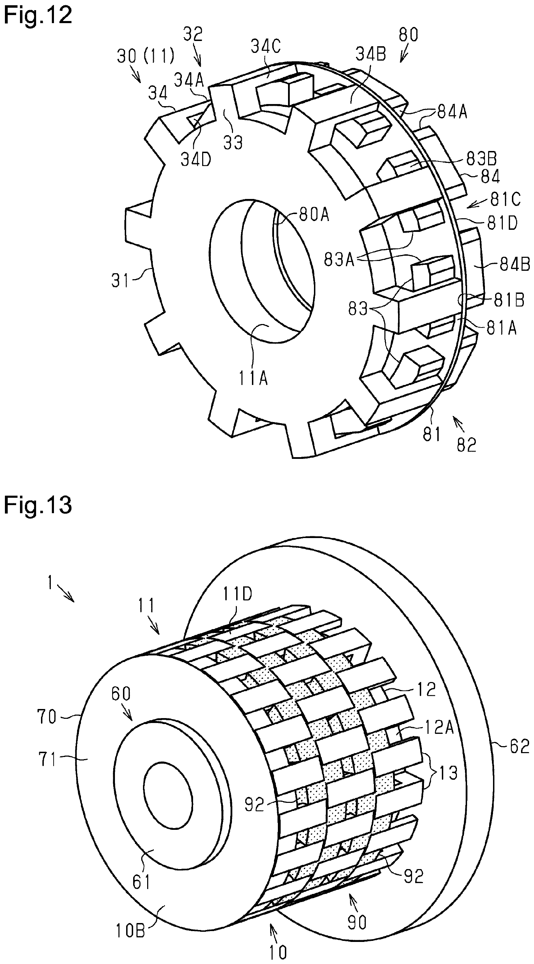

As shown in Fig. 12, the second side surfaces 83B of the first support portions 83 contact the second stator claw magnetic poles 32 of the second stator 30 in the radial direction. Specifically, the second side surfaces 83B of the first support portions 83 contact the distal ends 34A of the second stator claw magnetic poles 32 in the radial direction. In the example shown in Fig. 12, the second side surface 83B of each first support portion 83 contacts an inner surface 34D of the second claw magnetic pole 34 that includes the distal end 34A of the second stator claw magnetic pole 32. The inner surface 34D of the second claw magnetic pole 34 faces the rotation axis RA in the radial direction. In an example, the distal ends 34A of the second stator claw magnetic poles 32 are arranged in the predetermined gap and contact the second side surfaces 83B of the first support portions 83. Thus, the second stator 30 is positioned in the radial direction by contact of the second stator claw magnetic poles 32 with the second side surfaces 83B of the first support portions 83.

The second support portions 84 are arranged near an edge 81D of the second surface 81C of the insulation portion 81. In an example, the second support portions 84 are arranged on the second surface 81C so that a predetermined gap is formed between the second support portions 84 and the edge 81D of the second surface 81C in the radial direction. In an example, the number of the second support portions 84 is ten. The second support portions 84 are arranged, for example, near the edge 81D of the second surface 81C of the insulation portion 81 in equal intervals in the circumferential direction. The second support portions 84 have substantially the same structure as the first support portions 83.

Each second support portion 84 includes a side surface 84A (hereafter, "the first side surface 84A") that contacts one of a corresponding one of the stator claw magnetic poles 22 of the first stator 20 and a corresponding one of the stator claw magnetic poles 23 of the second stator 30 in the circumferential direction. Each second support portion 84 includes a side surface 84B (hereafter, "the second side surface 84B") at a side opposite to an end surface that is located toward the rotation axis RA in the radial direction. The second support portion 84 contacts the other one of a corresponding one of the stator claw magnetic poles 22 of the first stator 20 and a corresponding one of the stator claw magnetic poles 23 of the second stator 30.

The first side surfaces 84A of the second support portions 84 contact the second stator claw magnetic poles 32 of the second stator 30 in the circumferential direction. The relationship of the first side surfaces 84A of the second support portions 84 and the second stator claw magnetic poles 32 is substantially the same as the relationship of the first side surfaces 83A of the first support portions 83 and the first stator claw magnetic poles 22. Thus, the second stator 30 is positioned in the circumferential direction by contact of the second stator claw magnetic poles 32 with the first side surfaces 84A of the second support portions 84.

Each second support portion 84 contacts the second back yoke 31 of the second stator 30 on the side surface (hereafter, "the third side surface") that is located toward the rotation axis RA in the radial direction. The relationship of the third side surfaces of the second support portions 84 and the second back yoke 31 is substantially the same as the relationship of the third side surfaces 83C of the first support portions 83 and the first back yoke 21. Thus, the second stator 30 is positioned in the radial direction by contact of the second back yoke 31 with the third side surfaces of the second support portions 84.

The second side surfaces 84B of the second support portions 84 contact the first stator claw magnetic poles 22 of the first stator 20 in the radial direction. The relationship of the second side surfaces 84B of the second support portions 84 and the first stator claw magnetic poles 22 is substantially the same as the relationship of the second side surfaces 83B of the first support portions 83 and the second stator claw magnetic poles 32. Thus, the first stator 20 is positioned in the radial direction by contact of the first stator claw magnetic poles 22 with the second side surfaces 84B of the second support portions 84. In this manner, in two stator iron cores 11 located next to each other in the axial direction, one stator iron core 11 is positioned by the first support portions 83 and the other stator iron core 11 is positioned by the second support portions 84.

The insulation portion 81 of the interphase insulation member 80 axially contacts one of the distal ends 24A of the first stator claw magnetic poles 22 and the distal ends 34A of the second stator claw magnetic poles 32 of the stator iron cores 11, which are adjacent to the insulation portion 81, that extend toward the insulation portion 81. In an example, the first surface 81A of the insulation portion 81 contacts the distal ends 34A of the second stator claw magnetic poles 32 in the axial direction, and the second surface 81C of the insulation portion 81 contacts the distal ends 24A of the first stator claw magnetic poles 22 in the axial direction. The insulation portion 81 does not have to axially contact one of the distal ends 24A of the first stator claw magnetic poles 22 and the distal ends 34A of the second stator claw magnetic poles 32 of the stator iron cores 11, which are adjacent to the insulation portion 81, that extend toward the insulation portion 81.

The present embodiment has following advantages in addition to advantages (1-1) to (1-12) of the first embodiment.
(2-1) The support portions 82 contact one of the first stator claw magnetic poles 22 and the second stator claw magnetic poles 32 of the stator iron cores 11, which are adjacent to the insulation portion 81, in the circumferential direction and contact the other one of the first stator claw magnetic poles 22 and the second stator claw magnetic poles 32 in the radial direction. With this structure, in the stator iron cores 11 adjacent to the insulation portion 81, the first stators 20 are positioned in one of the circumferential direction and the radial direction by contact of the first stator claw magnetic poles 22 with the support portions 82, and the second stators 30 are positioned in the other one of the circumferential direction and the radial direction by contact of the second stator claw magnetic poles 32 with the support portions 82. This allows for appropriate positioning of the stator iron cores 11 in the circumferential direction and the radial direction. Further, the first stators 20 and the second stators 30 can be positioned in the circumferential direction and the radial direction without the need for the stator iron cores 11 to have a complicated structure.

### Third embodiment

The motor 1 of a third embodiment will now be described with reference to Figs. 13 to 16. The motor 1 of the present embodiment differs from the motor 1 of the first embodiment in the structure of the interphase insulation member. In the description hereafter, same reference numerals are given to those components having the same functions as the corresponding components of the motor 1 in the first embodiment. Such components will not be described in detail. Fig. 13 shows the motor 1 without the rotor 50.

As shown in Fig. 13, the stator 10 includes the stator iron cores 11 arranged in the axial direction and an interphase insulation member 90 arranged between the stator iron cores 11. The interphase insulation member 90 is a non-magnetic body. In an example, the interphase insulation member 90 is formed from resin. The interphase insulation member 90 is arranged between one stator iron core 11 and another stator iron core 11 that are located next to each other in the axial direction so that the one stator iron core 11 is insulated from the other stator iron core 11. The number of the interphase insulation members 90 is determined by the number of the stator iron cores 11. In an example, the number of the interphase insulation members 90 is two. In Fig. 13, the interphase insulation members 90 are dotted. The insulator 70 in the present embodiment may have the form obtained by equally dividing the interphase insulation member 90 into two along a plane orthogonal to the axial direction. Alternatively, the insulator 70 may have the form of a flat plate or substantially the same shape as the interphase insulation member 90.

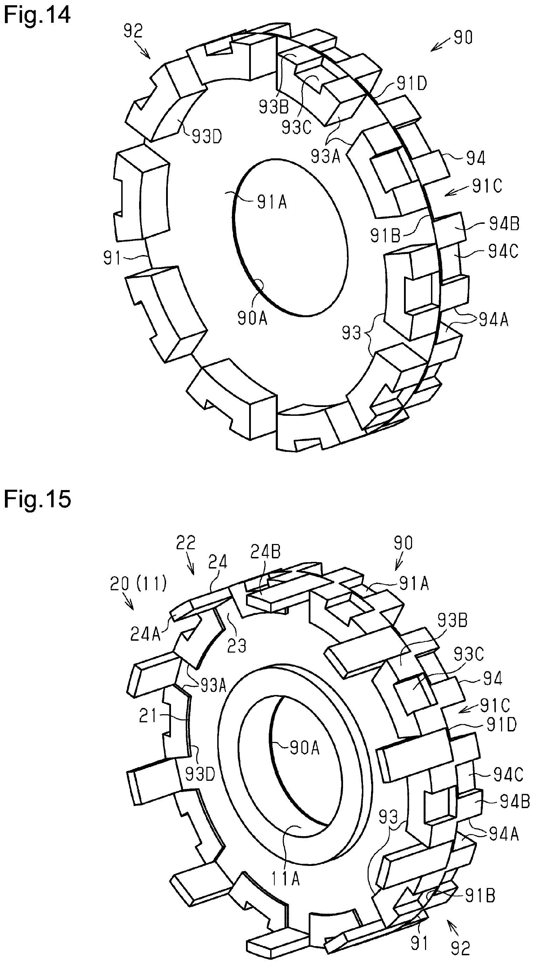

As shown in Fig. 14, each interphase insulation member 90 includes a through hole 90A extending in the axial direction. The through hole 90A defines the through hole 10A of the stator 10. The interphase insulation member 90 includes an insulation portion 91 and support portions 92. The insulation portion 91 is arranged between adjacent stator iron cores 11. The insulation portion 91 has substantially the same shape as the insulation portion 41 of the first embodiment. The support portions 92 are arranged on the insulation portion 91 to contact the stator claw magnetic poles 13 of the stator iron cores 11. In an example, the support portions 92 are arranged on the insulation portion 91 to extend in at least one of the axial direction and the radial direction. The stator claw magnetic poles 13 contact the support portions 92 in at least one of the circumferential direction and the radial direction. In the present embodiment, the stator claw magnetic poles 13 contact the support portions 92 in the circumferential direction and the radial direction (refer to Fig. 13). Specifically, the support portions 92 contact one of the first stator claw magnetic poles 22 and the second stator claw magnetic poles 32 of the stator iron cores 11, which are adjacent to the insulation portion 91, in the circumferential direction and contact the other one of the first stator claw magnetic poles 22 and the second stator claw magnetic poles 32 in the circumferential direction and the radial direction.

The support portions 92 include first support portions 93 and second support portions 94. The first support portions 93 extend from a first surface 91A of the insulation portion 91 in the axial direction. The second support portions 94 extend from a second surface 91C of the insulation portion 91 in the axial direction at the opposite side of the first surface 91A. The first support portions 93 are arranged at positions differing from positions where the second support portions 94 are arranged in the circumferential direction. The difference in position between the first support portions 93 and the second support portions 94 in the circumferential direction is set based on the positions of the stator iron cores 11 of each phase in the circumferential direction. The stator iron core 11 contacting the first support portions 93 is located next to the stator iron core 11 contacting the second support portions 94 in the axial direction.

The first support portions 93 are arranged on an edge 91B of the first surface 91A of the insulation portion 91. In an example, the number of the first support portions 93 is ten. The first support portions 93 are arranged, for example, on the edge 91B of the first surface 91A of the insulation portion 91 in equal intervals in the circumferential direction. Each first support portion 93 is post-shaped. In an example, the first support portion 93 has the form of a substantially quadrilateral post that becomes smaller toward the rotation axis RA of the rotor 50 in the radial direction.

Each first support portion 93 includes a side surface 93A (hereafter, "the first side surface 93A") that contacts one of a corresponding one of the stator claw magnetic poles 22 of the first stator 20 and a corresponding one of the stator claw magnetic poles 23 of the second stator 30 in the circumferential direction. Each first support portion 93 includes a side surface 93B (hereafter, "the second side surface 93B") at the opposite side of a side surface 93D that is located toward the rotation axis RA in the radial direction. The second side surface 93B contacts the other one of a corresponding one of the stator claw magnetic poles 22 of the first stator 20 and a corresponding one of the stator claw magnetic poles 23 of the second stator 30. Specifically, each first support portion 93 includes a recess 93C arranged in the second side surface 93B that contacts the other one of a corresponding one of the stator claw magnetic poles 22 of the first stator 20 and a corresponding one of the stator claw magnetic poles 23 of the second stator 30. The recesses 93C are recessed from the second side surfaces 93B to allow for accommodation of the distal ends 24A, 34A of corresponding ones of the stator claw magnetic poles 22, 32.

As shown in Fig. 15, the first side surfaces 93A of the first support portions 93 contact the first stator claw magnetic poles 22 of the first stator 20 in the circumferential direction. In an example, each first stator claw magnetic pole 22 is sandwiched between opposing first side surfaces 93A of first support portions 93 in the circumferential direction. Thus, the first stator 20 is positioned in the circumferential direction by the contact of the first stator claw magnetic poles 22 and the first side surfaces 93A of the first support portions 93.

In each first support portion 93, the side surface 93D (hereafter, "the third side surface 93D") that is located toward the rotation axis RA in the radial direction contacts the first back yoke 21 of the first stator 20. In an example, the third side surfaces 93D of the first support portions 93 contact the outer circumferential surface 21A of the first back yoke 21 in the radial direction. In this manner, the first stator 20 is positioned in the radial direction by contact of the first back yoke 21 with the third side surfaces 93D of the first support portions 93.

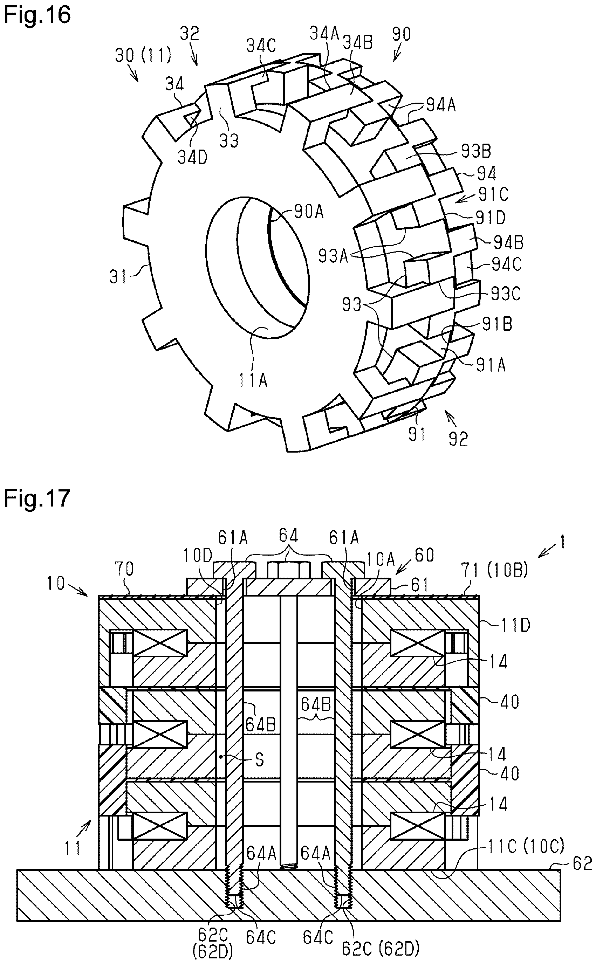

As shown in Fig. 16, the recesses 93C of the first support portions 93 contact the second stator claw magnetic poles 32 of the second stator 30 in the circumferential direction and the radial direction. Specifically, the recesses 93C of the first support portions 93 contact the distal ends 34A of the second stator claw magnetic poles 32 in the circumferential direction and the radial direction. In the example shown in Fig. 16, each recess 93C of the first support portion 93 contacts the side surfaces 34C of the corresponding second claw magnetic pole 34 including the distal end 34A of the second stator claw magnetic pole 32 in the circumferential direction and contacts the inner surface 34D of the second claw magnetic pole 34 in the radial direction. In an example, the distal ends 34A of the second stator claw magnetic poles 32 are fitted in the recesses 93C of the first support portions 93. Thus, the second stator 30 is positioned in the circumferential direction and the radial direction by contact of the second stator claw magnetic poles 32 with the recesses 93C of the first support portions 93.

The second support portions 94 are arranged on an edge 91D of the second surface 91C of the insulation portion 91. In an example, the number of the second support portions 94 is ten. The second support portions 94 are arranged, for example, on the edge 91D of the second surface 91C of the insulation portion 91 in equal intervals in the circumferential direction. The second support portions 94 have substantially the same structure as the first support portions 93.

Each second support portion 94 includes a side surface 94A (hereafter, "the first side surface 94A") that contacts one of a corresponding one of the stator claw magnetic poles 22 of the first stator 20 and a corresponding one of the stator claw magnetic poles 23 of the second stator 30 in the circumferential direction. Each second support portion 94 includes a side surface 94B (hereafter, "the second side surface 94B") at the opposite side of a side surface that is located toward the rotation axis RA in the radial direction. The second side surface 94B contacts the other one of a corresponding one of the stator claw magnetic poles 22 of the first stator 20 and a corresponding one of the stator claw magnetic poles 23 of the second stator 30. Specifically, each second support portion 94 includes a recess 94C arranged in the second side surface 93B that contacts the other one of a corresponding one of the stator claw magnetic poles 22 of the first stator 20 and a corresponding one of the stator claw magnetic poles 23 of the second stator 30. The recesses 94C are recessed from the second side surface 94B to allow for accommodation of the distal ends 24A, 34A of corresponding ones of the stator claw magnetic poles 22, 32.

The first side surfaces 94A of the second support portions 94 contact the second stator claw magnetic poles 32 of the second stator 30 in the circumferential direction. The relationship of the first side surfaces 94A of the second support portions 94 and the second stator claw magnetic poles 32 is substantially the same as the relationship of the first side surfaces 93A of the first support portions 93 and the first stator claw magnetic poles 22. Thus, the second stator 30 is positioned in the circumferential direction by contact of the second stator claw magnetic poles 32 with the first side surfaces 94A of the second support portions 94.

Each second support portion 94 contacts the second back yoke 31 of the second stator 30 on the side surface (hereafter, "the third side surface") that is located toward the rotation axis RA in the radial direction. The relationship of the third side surfaces of the second support portions 94 and the second back yoke 31 is substantially the same as the relationship of the third side surfaces 93D of the first support portions 93 and the first back yoke 21. Thus, the second stator 30 is positioned in the radial direction by the contact of the second back yoke 31 and the third side surfaces of the second support portions 94.

The recesses 94C of the second support portions 94 contact the first stator claw magnetic poles 22 of the first stator 20 in the circumferential direction and the radial direction. The relationship of the recesses 94C of the second support portions 94 and the first stator claw magnetic poles 22 is substantially the same as the relationship of the recesses 93C of the first support portions 93 and the second stator claw magnetic poles 32. Thus, the first stator 20 is positioned in the circumferential direction and the radial direction by contact of the first stator claw magnetic poles 22 with the recesses 94C of the second support portions 94. In this manner, in the two stator iron cores 11 located next to each other in the axial direction, one stator iron core 11 is positioned by the first support portions 93 and the other stator iron core 11 is positioned by the second support portions 94.

The insulation portion 91 of the interphase insulation member 90 axially contacts one of the distal ends 24A of the first stator claw magnetic poles 22 and the distal ends 34A of the second stator claw magnetic poles 32 of the stator iron cores 11, which are adjacent to the insulation portion 91, that extend toward the insulation portion 91. In an example, the first surface 91A of the insulation portion 91 contacts the distal ends 34A of the second stator claw magnetic poles 32 in the axial direction, and the second surface 91C of the insulation portion 91 contacts the distal ends 24A of the first stator claw magnetic poles 22 in the axial direction. The insulation portion 91 does not have to axially contact one of the distal ends 24A of the first stator claw magnetic poles 22 and the distal ends 34A of the second stator claw magnetic poles 32 of the stator iron cores 11, which are adjacent to the insulation portion 91, that extend toward the insulation portion 91.

The present embodiment has the following advantages in addition to advantages (1-1) to (1-12) of the first embodiment.

(3-1) The support portions 92 contact one of the first stator claw magnetic poles 22 and the second stator claw magnetic poles 32 of the stator iron cores 11, which are adjacent to the insulation portion 91, in the circumferential direction and contact the other one of the first stator claw magnetic poles 22 and the second stator claw magnetic poles 32 in the circumferential direction and the radial direction. With this structure, in the stator iron cores 11 adjacent to the insulation portion 91, one of the first stators 20 and the second stators 30 are positioned in the circumferential direction by contact of the stator claw magnetic poles 22 and 32 with the support portions 92, and the other one of the first stators 20 and the second stators 30 are positioned in the circumferential direction and the radial direction by the contact of the stator claw magnetic poles 22 and 32 and the support portions 92. This allows the stator iron cores 11 to be positioned in the circumferential direction and the radial direction. Further, the first stators 20 and the second stators 30 can be positioned in the circumferential direction and the radial direction without of the need for the stator iron cores 11 to have a complicated structure.

### Fourth Embodiment

The motor 1 of a fourth embodiment will now be described with reference to Fig. 17. The motor 1 of the present embodiment differs from the motor 1 of the first embodiment in the structure of the fixing member 60. In the description hereafter, same reference numerals are given to those components having the same functions as the corresponding components of the motor 1 in the first embodiment. Such components will not be described in detail. Fig. 17 shows a cross section of the motor 1 without the rotor 50.

The fixing member 60 includes the first end plate 61, the second end plate 62, and more than one rod-like portion 64. The rod-like portions 64 are insertable in the through hole 10A of the stator 10. In an example, the number of the rod-like portions 64 is four. The rod-like portions 64 are spaced apart from one another in the circumferential direction. In an example, the rod-like portions 64 are arranged in equal intervals in the circumferential direction. The rod-like portions 64 are fixed to the first end plate 61 and the second end plate 62 in a state in which the rod-like portions 64 are inserted in the through hole 10A of the stator 10 and the stator 10 is sandwiched between the first end plate 61 and the second end plate 62 in the axial direction. In the present embodiment, the first end plate 61, the second end plate 62, and the rod-like portions 64 are formed separately from one another. In some examples, the number of the rod-like portions 64 may be three or less or five or greater.

Each rod-like portion 64 includes a thread 64A. The thread 64A is formed in an outer circumferential surface 64B of the rod-like portion 64. In an example, the thread 64A is formed in a distal end 63C of the rod-like portion 64. The rod-like portion 64 of the present embodiment forms a bolt. The rod-like portion 64 opposes the wall 10D of the through hole 10A of the stator 10 with the gap S extending in between in the radial direction. At least one of the first end plate 61 and the second end plate 62 includes threads 62C that can be joined with the threads 64A of the rod-like portions 64. The first end plate 61 includes insertion holes 61A allowing for insertion of the rod-like portions 64. The second end plate 62 includes insertion holes 62D allowing for insertion of the rod-like portions 64 instead of the insertion hole 62B of the first embodiment. In an example, the thread 62C is formed in each insertion hole 62D of the second end plate 62. The rod-like portions 64 are fastened to the second end plate 62 by inserting the rod-like portions 64 through the insertion holes 61A of the first end plate 61 and the through hole 10A of the stator 10 into the insertion holes 62D of the second end plate 62 and then joining the threads 64A of the rod-like portions 64 with the corresponding threads 62C of the second end plate 62. In this manner, the stator 10 is fixed, sandwiched between the first end plate 61 and the second end plate 62.

The present embodiment has the following advantages in addition to advantages (1-1) to (1-7) and (1-9) to (1-12) of the first embodiment.
(4-1) The rod-like portions 64 are spaced apart from one another in the circumferential direction about the rotation axis RA. With this structure, the rod-like portions 64 are inserted in the through hole 10A of the stator 10 and fixed to the first end plate 61 and the second end plate 62. Thus, the stator 10 is stably fixed.

### Fifth Embodiment

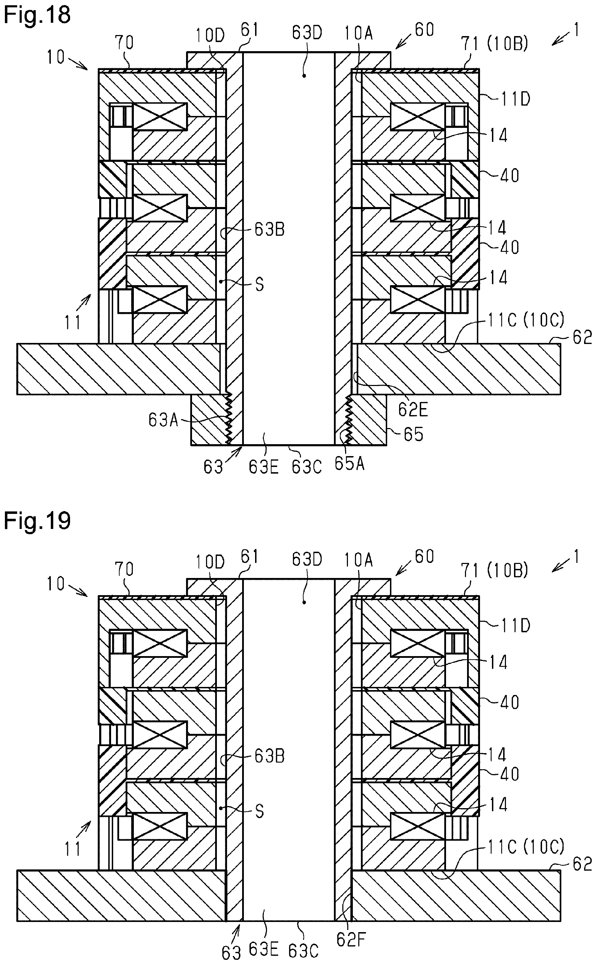

The motor 1 of a fifth embodiment will now be described with reference to Fig. 18. The motor 1 of the present embodiment differs from the motor 1 of the first embodiment in the structure of the fixing member 60. In the description hereafter, same reference numerals are given to those components having the same functions as the corresponding components of the motor 1 in the first embodiment. Such components will not be described in detail. Fig. 18 shows a cross section of the motor 1 without the rotor 50.

The fixing member 60 includes the first end plate 61, the second end plate 62, and at least one rod-like portion 63. At least one of the first end plate 61 and the second end plate 62 includes a through hole 62E extending in the axial direction and allowing for insertion of the rod-like portion 63. In an example, the second end plate 62 includes the through hole 62E instead of the insertion hole 62B in the first embodiment. The fixing member 60 further includes a holding section 65 on which a thread 65A is formed. The thread 65A of the holding section 65 can be joined with the thread 63A of the rod-like portion 63. The holding section 65 is arranged to oppose the stator 10 with one of the first end plate 61 and the second end plate 62 located between the holding section 65 and the stator 10. In an example, the holding section 65 is arranged to oppose the stator 10 via the second end plate 62 located between the holding section 65 and the stator 10. The holding section 65 of the present embodiment forms a nut.

The rod-like portion 63 has a predetermined length in the axial direction. The axial length of the rod-like portion 63 is greater than the sum of the thickness of the stator 10 and the thickness of the second end plate 62 in the axial direction. Preferably, the axial length of the rod-like portion 63 is less than or equal to the sum of the thickness of the stator 10, the thickness of the second end plate 62, and the thickness of the holding section 65 in the axial direction. The axial length of the rod-like portion 63 in the present embodiment coincides with the sum of the thickness of the stator 10, the thickness of the second end plate 62, and the thickness of holding section 65 in the axial direction. The axial length of the rod-like portion 63 may be greater than the sum of the thickness of the stator 10, the thickness of the second end plate 62, and the thickness of the holding section 65 in the axial direction.

The rod-like portion 63 is fastened to the holding section 65 by inserting the rod-like portion 63 in the through hole 10A of the stator 10 and the through hole 62E of the second end plate 62 and joining the thread 63A of the rod-like portion 63, which projects out of the through hole 62E of the second end plate 62, with the thread 65A of the holding section 65. In this manner, the stator 10 is fixed, sandwiched between the first end plate 61 and the second end plate 62.

The present embodiment has the following advantages in addition to advantages (1-1) to (1-8) and (1-10) to (1-12) of the first embodiment.
(5-1) The thread 63A of the rod-like portion 63, which is inserted in the through hole 10A of the stator 10, are inserted through the through hole 62E of the second end plate 62 and joined with the thread 65A of the holding section 65. With this structure, a simple structure fixes the stator 10.

### Sixth Embodiment

The motor 1 of a sixth embodiment will now be described with reference to Fig. 19. The motor 1 of the present embodiment differs from the motor 1 of the first embodiment in the structure of the fixing member 60. In the description hereafter, same reference numerals are given to those components having the same functions as the corresponding components of the motor 1 in the first embodiment. Such components will not be described in detail. Fig. 19 shows a cross section of the motor 1 without the rotor 50.

The fixing member 60 includes the first end plate 61, the second end plate 62, and at least one rod-like portion 63. At least one of the first end plate 61 and the second end plate 62 includes a hole 62F extending in the axial direction and allowing for insertion of the rod-like portion 63. In an example, the second end plate 62 includes the hole 62F instead of the insertion hole 62B of the first embodiment. Preferably, the rod-like portion 63 does not include the thread 63A.

The rod-like portion 63 is fixed to at least one of the first end plate 61 and the second end plate 62 in accordance with, for example, a first example or a second example described as below. In the first example, the rod-like portion 63 is fastened in the hole 62F of at least one of the first end plate 61 and the second end plate 62 through any of press-fitting, shrink-fitting, and expansion-fitting. In an example, the rod-like portion 63 is fastened in the hole 62F of the second end plate 62 through any of press-fitting, shrink-fitting, and expansion-fitting. In the second example, the rod-like portion 63 is adhered, fused, or welded to at least one of the first end plate 61 and the second end plate 62. In an example, the rod-like portion 63 is adhered, fused, or welded to the second end plate 62. In this case, the rod-like portion 63 may be adhered, fused, or welded in the hole 62F of the second end plate 62. The second end plate 62 does not have to include the hole 62F.

The present embodiment has following advantages in addition to advantages (1-1) to (1-8) and (1-10) to (1-12) of the first embodiment.
(6-1) The stator 10 is fixed by inserting the rod-like portion 63 in the through hole 10A of the stator 10 and fastening the rod-like portion 63 in the hole 62F of the second end plate 62 through any of press-fitting, shrink-fitting, and expansion-fitting. With this structure, the stator 10 can be firmly fixed.
(6-2) The stator 10 is fixed when the rod-like portion 63, which is inserted in the through hole 10A of the stator 10, is adhered, fused, or welded to the second end plate 62. With this structure, the stator 10 can be firmly fixed.

### Seventh Embodiment

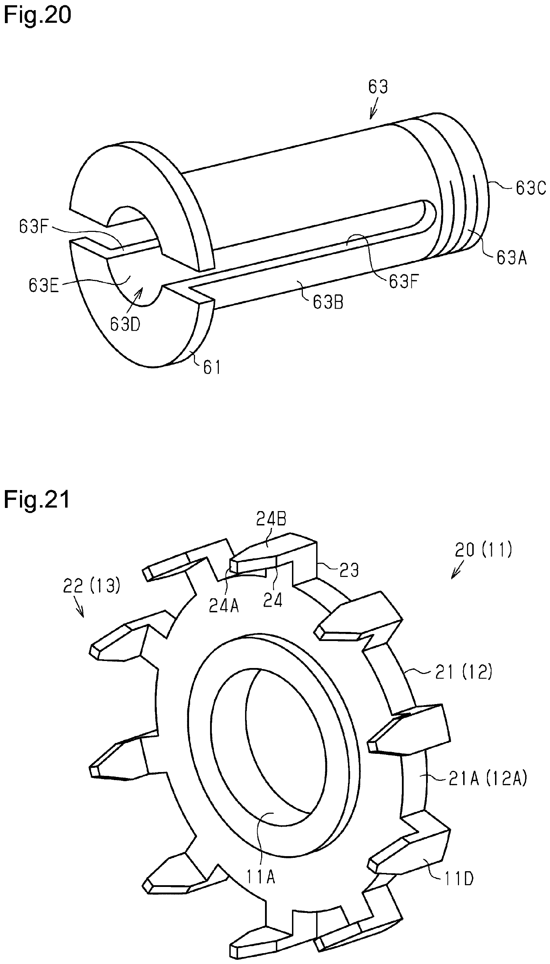

The motor 1 of a seventh embodiment will now be described with reference to Fig. 20. The motor 1 of the present embodiment differs from the motor 1 of the first embodiment in the structure of the rod-like portion 63. In the description hereafter, same reference numerals are given to those components having the same functions as the corresponding components of the motor 1 in the first embodiment. Such components will not be described in detail.

The rod-like portion 63 includes a cavity 63D. The rod-like portion 63 includes a through portion 63F extending in the radial direction from an inner circumferential surface 63E, which defines the cavity 63D, to the outer circumferential surface 63B of the rod-like portion 63. The through portion 63F is, for example, a slit extending in the axial direction. The through portion 63F is large enough to draw out the winding 14 of the stator 10. In an example, the number of the through portions 63F is two. The two through portions 63F are formed in the rod-like portion 63, for example, opposing each other in the radial direction. In an example, the through portion 63F is formed continuously in the first end plate 61 and the rod-like portion 63. The through portion 63F may be formed only in the rod-like portion 63.

The present embodiment has the following advantages in addition to advantages (1-1) to (1-12) of the first embodiment.
(7-1) The rod-like portion 63 includes the through portion 63F extending in the radial direction from the inner circumferential surface 63E, which defines the cavity 63D, to the outer circumferential surface 63B. With this structure, the winding 14 of the stator 10 can be easily drawn out of the through portion 63F. Further, this structure reduces the weight of the motor 1.

### Modified Examples

The above embodiments exemplify, without any intention to limit, applicable forms of the motor related to the present disclosure. The motor related to the present disclosure can take a form differing from the forms described in the above embodiments. In an example, some of the components of the embodiments may be replaced, changed, or omitted. Further, another component may be added to the embodiments. In the modified examples described hereafter, same reference numerals are given to those components that are the same as the corresponding components of the above embodiments. Such components will not be described in detail.

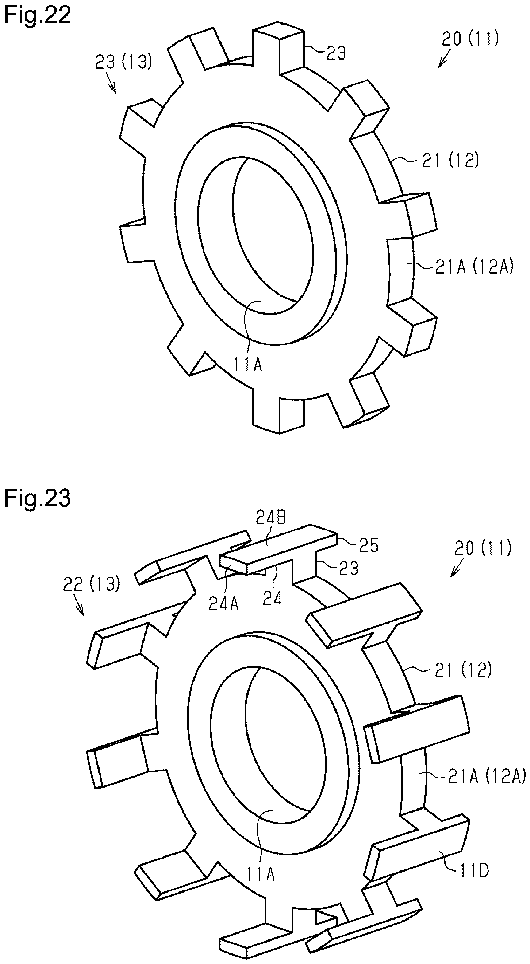

In the above embodiments, the structure of the stator iron core 11 may be changed in any manner. In a first example, as shown in Fig. 21, the distal ends 24A of the first stator claw magnetic poles 22 of the first stator 20 are tapered. In an example, the distal ends 24A of the first stator claw magnetic poles 22 are tapered in the circumferential direction. The same modification can also be applied to the second stator 30. In a second example, as shown in Fig. 22, the first stator claw magnetic poles 22 of the first stator 20 do not include the second claw magnetic poles 24. In this case, it is preferred that the second stator claw magnetic poles 32 of the second stator 30 include the first claw magnetic poles 33 and the second claw magnetic poles 34. In a third example, as shown in Fig. 23, the first stator claw magnetic poles 22 of the first stator 20 further include third claw magnetic poles 25 in addition to the first claw magnetic poles 23 and the second claw magnetic poles 24. Each third claw magnetic pole 25 extends from the first claw magnetic pole 23, for example, in the axial direction at the opposite side of the second claw magnetic pole 24. The third claw magnetic pole 25 has a shorter axial length than the second claw magnetic pole 24. The same modification can be applied to the second stator 30. In a fourth example, the stator iron cores 11 are formed from an electromagnetic steel sheet.

In the above embodiments, the structure of the stator 10 may be changed in any manner. In a first example, the stator 10 is a claw pole type stator having for a number of phases that is two or less or four or greater. In this case, the number of the stator iron cores 11 is two or four or greater. In a second example, the stator 10 does not include the interphase insulation members 40, 80, 90.

In the above embodiments, the stator 10 of the outer rotor type motor 1 is described. However, the above described structures of the fixing member 60 are also applicable to the rotor 50 of the outer rotor type motor 1.

In the above embodiments, the stator 10 of the outer rotor type motor 1 is described. However, the above described structures of the fixing member 60 are also applicable to a stator of an inner rotor type motor 1. Further, the above described structures of the fixing member 60 are applicable to a rotor 100 of an inner rotor type motor 1. An example of the rotor 100 including the structure of the fixing member 60 will now be described.

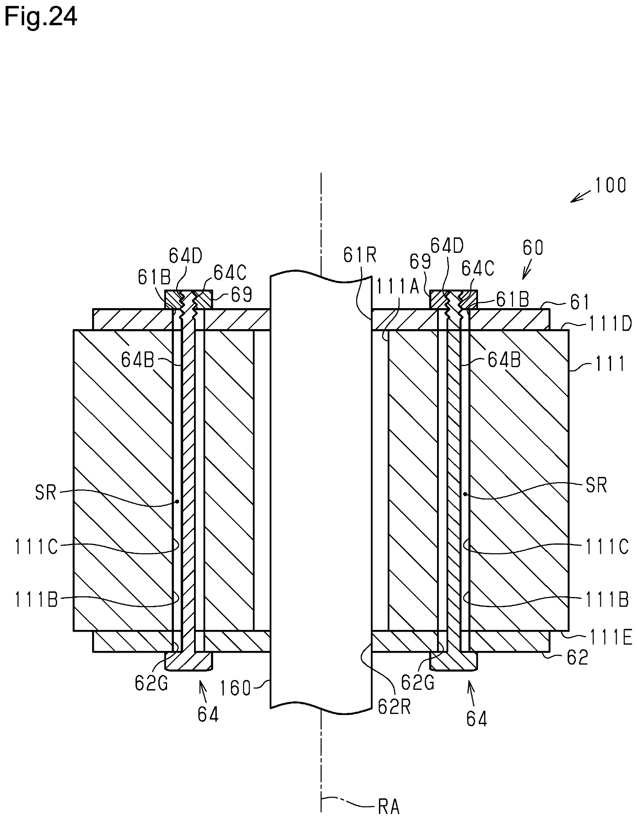

In Fig. 24, in the inner rotor type motor 1, the rotor 100 may be fixed by the fixing member 60 described in the above embodiments. Fig. 24 shows an example of a cross-sectional view of the rotor 100 of the inner rotor type motor. The rotor 100 includes a rotor iron core 111 and the fixing member 60 for fixing the rotor iron core 111. Magnets (not shown) are arranged on the outer circumference of the rotor iron core 111 in equal intervals in the circumferential direction about the rotation axis RA.

The rotor iron core 111 is formed by a powder magnetic core. The rotor iron core 111 includes a first through hole 111A and second through holes 111B. A rotation shaft 160 of the motor 1 is inserted through the first through hole 111A. The rod-like portions 64 of the fixing member 60 are inserted through the second through holes 111B. The first through hole 111A is formed in the rotor iron core 111 extending along the rotation axis RA. The second through holes 111B are arranged in the rotor iron core 111 about the rotation axis RA in intervals in the circumferential direction. The fixing member 60 includes the first end plate 61, the second end plate 62, and more than one rod-like portion 64. The first end plate 61 includes a first hole 61R through which the rotation shaft 160 is inserted. The first end plate 61 is welded or adhered to the rotation shaft 160. The second end plate 62 includes a second hole 62R through which the rotation shaft 160 is inserted. The second end plate 62 is welded or adhered to the rotation shaft 160. The rod-like portions 64 are insertable into the second through holes 111B of the rotor 100. In an example, the number of the rod-like portions 64 is four. The rod-like portions 64 are spaced apart from one another in the circumferential direction. In an example, the rod-like portions 64 are arranged in equal intervals in the circumferential direction. The first end plate 61 is arranged to directly contact one end surface 111D of the rotor 100 in the axial direction. The first end plate 61 may be arranged in the rotor 100 with an insulation member located between the first end plate 61 and the end surface 111D in the axial direction. The second end plate 62 is arranged to directly contact the other end surface 111E of the rotor 100 in the axial direction. The second end plate 62 may be arranged in the rotor 100 with an insulation member located between the second end plate 62 and the other end surface 111E in the axial direction. In the present embodiment, the rod-like portions 64 are fixed to the first end plate 61 and the second end plate 62 in a state in which the rod-like portions 64 are inserted in the second through holes 111B of the rotor 100, and the rotor 100 is sandwiched between the first end plate 61 and the second end plate 62 in the axial direction. In the example shown in Fig. 24, the first end plate 61, the second end plate 62, and the rod-like portions 64 are formed separately from one another. In some examples, the number of the rod-like portion 64 may be three or less or five or greater.

In the example shown in Fig. 24, each rod-like portion 64 includes a thread 64D. The thread 64D is formed on the outer circumferential surface 64B of the rod-like portion 64. In an example, the thread 64D is formed in the distal end 64C of the rod-like portion 64. The thread 64D can be joined with a nut 69. The rod-like portion 64 of the present embodiment forms a bolt. Each rod-like portion 64 opposes a wall 111C of the second through hole 111B of the rotor 100 with a gap SR extending in between. The first end plate 61 includes insertion holes 61B allowing for insertion of the rod-like portions 64. The second end plate 62 includes insertion holes 62G allowing for insertion of the rod-like portions 64. The first end plate 61, the rod-like portions 64, the second end plate 62, and the rotor iron core 111 are coupled by inserting the rod-like portions 64 through the insertion holes 62G of the second end plate 62 and the second through holes 111B of the rotor 100 into the insertion holes 61B of the first end plate 61, and joining the nuts 69 with the threads 64D of the rod-like portions 64. This fixes the rotor iron core 111 of the rotor 100 sandwiched between the first end plate 61 and the second end plate 62 and fixes the rotation shaft 160 to the rotor iron core 111. With this structure, the rotor iron core 111 is fixed to the fixing member 60 by the force compressing the powder magnetic core. This avoids damage to the rotor iron core 111 formed by a powder magnetic core.

In this example, the rotor 100 includes the rotor iron core 111 formed by a powder magnetic core. This structure restricts generation of eddy current and loss that would be caused by an eddy current. Further, this structure increases the degree of freedom for the shape of the rotor iron core 111.

The claw pole type motor 1 is described in the above embodiments. However, the above described structures of the fixing member 60 are also applicable to a stator and a rotor of the motor 1 that is not claw pole type.

It should be understood that the present device may be embodied in many other specific forms within the scope and equivalence of the present device described in the appended claims.

### DESCRIPTION OF THE REFERENCE NUMERALS

1) motor
10) stator (claw pole type stator)
10A) through hole
10B) end surface
10C) end surface
10D) wall
11) stator iron core
11A) through hole
12) back yoke
13) stator claw magnetic pole
40, 80, 90) interphase insulation member
41, 81, 91) insulation portion
42, 82, 92) support portion
50) rotor
60) fixing member
61) first end plate
62) second end plate
62A, 62C) thread
62E) through hole
62F) hole
63, 64) rod-like portion
63A, 64A) thread
63B) outer circumferential surface
63D) cavity
63E) inner circumferential surface
63F) through portion
65) holding section
65A) thread
S) gap

## Claims

1. A motor (1) comprising:
a stator (10);
a rotor (50, 100) that is rotatable relative to the stator (10); and
a fixing member (60) that includes a first end plate (61), a second end plate (62), and at least one rod-like portion (63, 64), wherein
at least one of the stator (10) and the rotor (50, 100) includes an iron core (11, 111) formed by a powder magnetic core,
the iron core (11, 111) includes a through hole (10A, 111B) extending through the iron core (11, 111) in an axial direction of the rotor (50, 100),
the first end plate (61) is arranged to directly or indirectly contact one end surface (10B, 111D) of the iron core (11, 111) in the axial direction,
the second end plate (62) is arranged to directly or indirectly contact another end surface (10C, 111E) of the iron core (11, 111) in the axial direction, and
the rod-like portion (63, 64) is fixed to the first end plate (61) and the second end plate (62) in a state in which the rod-like portion (63, 64) is inserted in the through hole (10A, 111B) of the iron core (11, 111), and the iron core (11, 111) is sandwiched by the first end plate (61) and the second end plate (62) in the axial direction of the rotor (50, 100).

2. The motor according to claim 1, wherein one of the first end plate (61) and the second end plate (62) is formed integrally with the rod-like portion (63, 64).

3. The motor according to claim 1 or 2, wherein
the rod-like portion (63, 64) includes a thread (63A, 64A), and
at least one of the first end plate (61) and the second end plate (62) includes a thread (62A, 62C) that can be joined with the thread (63A, 64A) of the rod-like portion (63,64).

4. The motor according to any one of claims 1 to 3, wherein
the fixing member (60) further includes a holding section (65) including a thread (65A),
the rod-like portion (63, 64) includes a thread (63A, 64A), and
at least one of the first end plate (61) and the second end plate (62) includes a through hole (62E) extending through the at least one of the first end plate (61) and the second end plate (62) in the axial direction of the rotor (50, 100) and allowing for insertion of the rod-like portion (63, 64),
the holding section (65) is arranged to oppose the iron core (11, 111) with one of the first end plate (61) and the second end plate (62) located between the holding section (65) and the iron core (11, 111), and
the thread (63A, 64A) of the rod-like portion (63, 64) is joined with the thread (65A) of the holding section (65).

5. The motor according to any one of claims 1 to 4, wherein
at least one of the first end plate (61) and the second end plate (62) includes a hole (62F) extending in the axial direction of the rotor (50, 100) and allowing for insertion of the rod-like portion (63, 64), and
the rod-like portion (63,64) is fastened in the hole (62F) of the at least one of the first end plate (61) and the second end plate (62) through any of press-fitting, shrink-fitting, or expansion-fitting.

6. The motor according to any one of claims 1 to 5, wherein the rod-like portion (63, 64) is adhered, fused, or welded to at least one of the first end plate (61) and the second end plate (62).

7. The motor according to any one of claims 1 to 6, wherein the rod-like portion (63, 64) opposes a wall (10D) of the through hole (10A) of the iron core (11, 111) with a gap (S) extending in between in a radial direction of the rotor (50, 100).

8. The motor according to any one of claims 1 to 7, wherein
the fixing member (60) includes the rod-like portions (63, 64), and
the rod-like portions (63, 64) are spaced apart from one another in a circumferential direction about a rotation axis (RA) of the rotor (50, 100).

9. The motor according to any one of claims 1 to 8, wherein
the rod-like portion (63, 64) includes a cavity (63D), and
the rod-like portion (63, 64) includes a through portion (63F) extending in a radial direction of the rotor (50, 100) from an inner circumferential surface (63E) that defines the cavity (63D) to an outer circumferential surface (63B) of the rod-like portion (63, 64).

10. The motor according to any one of claims 1 to 9, wherein the stator (10) includes a stator iron core (11) formed by a powder magnetic core.

11. The motor according to any one of claims 1 to 10, wherein the rotor (100) includes a rotor iron core (111) formed by a powder magnetic core.

12. The motor according to any one of claims 1 to 11, wherein the stator (10) includes stator iron cores (11) arranged in the axial direction of the rotor (50, 100) and an interphase insulation member (40, 80, 90) arranged between the stator iron cores (11).

13. The motor according to claim 12, wherein:
each of the stator iron cores (11) includes a circular back yoke (12), which includes a through hole (11A), and a stator claw magnetic pole (13), which projects from the back yoke (12) in a radial direction of the rotor (50, 100);
the interphase insulation member (40, 80, 90) includes an insulation portion (41, 81, 91), which is located between adjacent ones of the stator iron cores (11), and a support portion (42, 82, 92); and
the stator claw magnetic pole (13) contacts the support portion (42, 82, 92) in at least one of a circumferential direction about a rotation axis (RA) of the rotor (50, 100) and the radial direction of the rotor (50, 100).
